# EUROPÄISCHE PATENTSCHRIFT

(11) **EP 3 362 701 B1**
(45) Veröffentlichungstag und Bekanntmachung des Hinweises auf die Patenterteilung: **09.08.2023**
(21) Anmeldenummer: 16793766.3
(22) Anmeldetag: 16.10.2016
(51) Int. Cl.: F16F 9/53, F16F 9/12

(54) **DREHDÄMPFER**
ROTARY DAMPER
AMORTISSEUR ROTATIONNEL

(30) Priorität: 15.10.2015 DE 102015117594
(43) Veröffentlichungstag der Anmeldung: 22.08.2018
(73) Patentinhaber: Inventus Engineering GmbH, 6771 St. Anton i. M. (AT)
(72) Erfinder: BATTLOGG, Stefan, 6771 St. Anton i.M. (AT)
(74) Vertreter: BSB Patentanwälte Schütte & Engelen Partnerschaft mbB
(86) Internationale Anmeldenummer: PCT/EP2016/074823
(87) Internationale Veröffentlichungsnummer: WO 2017/064315

(56) Entgegenhaltungen:
- DE-A1-102009 030 995
- DE-A1-102013 014 158
- DE-A1-102013 203 331
- DE-B3-102005 021 945
- US-A1- 2004 217 568
- US-A1- 2009 183 959
- US-A1- 2013 175 132
- US-A1- 2014 152 066

## Beschreibung

Die vorliegende Erfindung betrifft einen Drehdämpfer, wobei der Drehdämpfer wenigstens eine Verdrängereinrichtung mit einer Dämpferwelle und mit ineinander eingreifenden und rotierenden Verdrängerkomponenten aufweist, um eine Drehbewegung der Dämpferwelle zu dämpfen.

Im Stand der Technik sind verschiedenste Drehdämpfer oder Rotationsdämpfer oder Rotationsbremsen bekannt geworden, mit denen eine Dämpfung der Drehbewegung einer Dämpferwelle möglich ist. Die bekannten Drehdämpfer sind jedoch oftmals nicht flexibel anwendbar oder das erforderliche Bremsmoment ist zu gering, die erforderlichen Drehzahlen zu hoch, das Bremsmoment kann gar kann nicht oder nicht schnell genug verändert oder eingestellt werden.

Die US 2014/0152066 A1 offenbart eine magnetorheologischen Dämpfer für sicherheitsrelevante Anwendungen. Der Dämpfer umfasst einen tassenförmigen Rotor, der in einem mit MRF gefüllten Scherspalt rotiert. Der Dämpfer funktioniert und dämpft kleine und mittlere Momente zufriedenstellend.

Die DE 10 2013 203 331 A1 offenbart einen Rotationsdämpfer für ein Fahrzeug zum Dämpfen von Relativbewegungen zwischen Fahrzeugrädern und Fahrzeugaufbau. Dabei ist eine Getriebestufe mit mehreren in Wirkverbindung stehenden Zahnrädern vorgesehen. Durch die Drehbewegung der Zahnräder ist Hydraulikmittel zum hydraulischen Dämpfen verdrängbar. Das hydraulische Medium kann durch ein annähernd dichtes Gehäuse ohne Zufluss und Abfluss kurzgeschlossen werden. Die Drosselwirkung ergibt sich durch die Leckage.

Die DE 10 2013 203 331 A1 offenbart auch die Verwendung eines magnetorheologischen Fluids zur Dämpfung. Die Getriebestufe mit den mehreren in Wirkverbindung stehenden Zahnrädern ist mit dem magnetorheologischen Fluid gefüllt. Der Abfluss der Getriebestufe wird zu einem externen Ventil geleitet werden, wo ein Magnetfeld auf ein magnetorheologisches Fluid einwirkt, bevor das Fluid zum Zufluss des Gehäuses zurückgeleitet wird. Nachteilig daran ist, dass das Gehäuse mit der Getriebestufe mit dem magnetorheologischen Fluid gefüllt ist. Als magnetorheologische Fluide bezeichnet man eine Suspension von magnetisch polarisierbaren Partikeln (Carbonyleisenpulver), die in einer Trägerflüssigkeit fein verteilt sind und einen Durchmesser zwischen etwa 1 µm und 10 µm aufweisen. Deshalb müssen alle Spalte zwischen sich zueinander bewegenden Komponenten, wie z.B Axialspalte zwischen dem drehenden Zahnrad und dem Gehäuse; Radialspalte zwischen Zahnflanke und Gehäuseinnenbohrung, Spalte zwischen den sich berührenden/kämmenden Zahnprofilen) in der Getriebestufe größer sein als die größten magnetischen Partikel bzw. sogar noch um ein vielfaches größer, weil die Partikel auch ohne Magnetfeld zu größeren Haufen verklumpen können bzw. unter Magnetfeldeinwirkung Ketten und damit größere Carbonyleiseneinheiten bilden. Ein falsch gewählter Spalt führt zum Verklemmen/Festfressen oder die (beschichteten) Partikel werden zermahlen und dadurch unbrauchbar. Das hat aber den bedeutenden Nachteil, dass aufgrund dieser zwingend notwendigen Laufspalte/Laufspiel ein sehr hoher Leckagestrom auftritt, besonders wenn man bedenkt, dass damit Drücke von über 100bar erzielt werden sollen. Damit ist keine hohe Dämpfung erreichbar. Zur Erreichung hoher Dämpfungswerte müssen alle Spalte aufwendig abgedichtet werden, was teuer bzw. teilweise technisch gar nicht möglich ist (z.B. sich abwälzender Spalt zwischen den zwei evolventen Zahnprofilen). Die hochdruckdichte stirnseitige Abdichtung eines komplex geformten Zahnrades in Kombination mit eisenhaltigen Flüssigkeiten ist großserientechnisch wirtschaftlich vernünftig nicht machbar. Deshalb eignet sich das Konstruktionsprinzip aus der DE 10 2013 203 331 A1 in Kombination mit magnetorheologischen Flüssigkeiten nicht zur Herstellung kostengünstiger und flexibel einstellbarer Rotationsdämpfer zur Dämpfung hoher Kräfte oder Momente. Das Dokument DE 10 2005 021 945 B3 offenbart die Merkmale der Präambel des Anspruchs 1.

Es ist deshalb die Aufgabe der vorliegenden Erfindung einen kostengünstigen Drehdämpfer zur Verfügung zu stellen, der eine flexible Einstellung der Dämpfung der Dämpferwelle ermöglicht und die Dämpfung hoher Kräfte und Drehmomente erlaubt und der insbesondere einfach aufgebaut ist.

Diese Aufgabe wird durch einen Drehdämpfer mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung des Ausführungsbeispiels.

Ein erfindungsgemäßer Drehdämpfer weist ein Gehäuse und wenigstens eine darin oder daran angeordnete Verdrängereinrichtung und wenigstens eine Magnetfeldquelle auf. Die Verdrängereinrichtung enthält wenigstens ein magnetorheologisches Fluid als Arbeitsfluid und ist damit betreibbar, um eine Dämpfung der Drehbewegung einzustellen. Es ist wenigstens ein stirnseitiger Axialspalt zwischen dem Gehäuse und der Verdrängereinrichtung ausgebildet. Wenigstens ein wesentlicher Teil des Magnetfeldes der Magnetfeldquelle durchtritt den Axialspalt zwischen dem Gehäuse und den Verdrängerkomponenten. Die Verdrängereinrichtung weist eine Dämpferwelle und ineinander eingreifende und relativ zueinander drehbare Verdrängerkomponenten auf, wobei eine Drehbewegung der Dämpferwelle dämpfbar ist. An beiden axialen Enden der Verdrängerkomponenten ist jeweils ein stirnseitiger Axialspalt zwischen dem Gehäuse und der Verdrängereinrichtung ausgebildet. Dabei tritt ein wesentlicher Teil des Magnetfeldes der Magnetfeldquelle durch beide Axialspalte zwischen dem Gehäuse und den Verdrängerkomponenten durch und bewirkt eine Dichtung der stirnseitigen Axialspalte. Dabei ist die Dämpferwelle um mehrere oder eine Vielzahl von Umdrehungen drehbar.

Damit ist eine Drehbewegung der Dämpferwelle dämpfbar. Insbesondere umfasst die Magnetfeldquelle wenigstens eine elektrische Spule.

Ein erfindungsgemäßer Drehdämpfer weist in einer bevorzugten Ausgestaltung folgende Merkmale auf. Der Drehdämpfer weist wenigstens eine Verdrängereinrichtung auf. Die Verdrängereinrichtung weist eine Dämpferwelle und ineinander eingreifende und insbesondere rotierende Verdrängerkomponenten auf. Dabei ist eine Drehbewegung der Dämpferwelle dämpfbar. Die Verdrängereinrichtung enthält ein magnetorheologisches Fluid als Arbeitsfluid. Es ist wenigstens eine Steuereinrichtung zugeordnet. Weiterhin ist wenigstens eine Magnetfeldquelle vorgesehen bzw. umfasst, die wenigstens eine elektrische Spule aufweist. Die Magnetfeldquelle ist über die Steuereinrichtung steuerbar und über das Magnetfeld ist das magnetorheologische Fluid beeinflussbar, um eine Dämpfung der Drehbewegung der Dämpferwelle einzustellen. Es ist wenigstens ein stirnseitiger Axialspalt zwischen dem Gehäuse und der Verdrängereinrichtung ausgebildet. Ein wesentlicher Teil des Magnetfeldes der Magnetfeldquelle durchtritt den Axialspalt zwischen dem Gehäuse und der Verdrängereinrichtung und insbesondere den Verdrängerkomponenten und bewirkt so eine Dichtung des stirnseitiger Axialspalts.

Der erfindungsgemäße Drehdämpfer hat viele Vorteile. Ein erheblicher Vorteil des erfindungsgemäßen Drehdämpfers besteht darin, dass die Verdrängereinrichtung mit einem magnetorheologischen Fluid als Arbeitsfluid ausgerüstet ist. Dadurch kann von einer Steuereinrichtung gesteuert das Magnetfeld der Magnetfeldquelle in Echtzeit, d. h. in wenigen Millisekunden (kleiner 10 oder 20 ms) eingestellt werden und somit wird in Echtzeit auch das anliegende Bremsmoment an der Dämpferwelle eingestellt. Der Aufbau des erfindungsgemäßen Drehdämpfers ist einfach und kompakt und benötigt wenig Bauteile, sodass der Drehdämpfer selbst als (Gross-)Serienteil kostengünstig herstellbar ist.

Erfindungsgemäß ist an beiden axialen Enden der Verdrängerkomponenten jeweils ein stirnseitiger Axialspalt zwischen dem Gehäuse und der Verdrängereinrichtung ausgebildet. Dabei tritt erfindungsemäß ein wesentlicher Teil des Magnetfeldes der Magnetfeldquelle durch beide Axialspalte zwischen dem Gehäuse und den Verdrängerkomponenten durch und bewirkt eine Dichtung der stirnseitigen Axialspalte, weil sich insbesondere die Carbonyleisenpartikel der magnetorheologischen Flüssigkeiten unter Magnetfeldeinfluss verketten und dadurch quasi "abdichten".

Der Begriff "Drehdämpfer" im Sinne der vorliegenden Erfindung bedeutet, dass sich Teile des Drehdämpfers im dämpfenden Betrieb gegeneinander drehen müssen. Hier bedeutet es, dass sich die mit dem magnetorheologischen Fluid benetzten Verdrängerkomponenten bei einer Dämpfung relativ zueinander drehen.

Vorzugsweise sind wenigstens zwei elektrische Spulen vorgesehen. Vorzugsweise ist jedem axialen Ende oder jeder Stirnseite jeweils wenigstens eine elektrische Spule zugeordnet.

Die Verdrängereinrichtung ist insbesondere als eine Art von Verdichtereinrichtung oder Pumpe ausgeführt. Die Verdrängereinrichtung weist ineinander eingreifende und im Betrieb rotierende Verdrängerkomponenten auf. Im Inneren der Verdrängereinrichtung ist ein Verdrängerraum vorgesehen, der auch als Verdichterraum bezeichnet werden kann. Im Inneren des Drehdämpfers und insbesondere im Innenraum des Gehäuses des Drehdämpfers bzw. im Innenraum der Verdrängereinrichtung ist ein magnetorheologisches Fluid als Arbeitsfluid enthalten. Die ineinander eingreifenden Verdrängerkomponenten werden durch das magnetorheologische Fluid benetzt.

In allen Ausgestaltungen ist es möglich und bevorzugt, dass die Verdrängerkomponenten als Zahnkomponenten oder Zahnräder ausgeführt sind. Die ineinander eingreifenden Verdrängerkomponenten kämmen insbesondere miteinander. Möglich ist auch der Einsatz schrägverzahnter Komponenten wie beispielsweise von Spindelschrauben oder anderer miteinander kämmender oder ineinander eingreifender Konturen oder Roots-Gebläsekonturen. Durch das Eingreifen der Verdrängerkomponenten wird das Raumvolumen beim Betrieb verändert.

In allen Ausgestaltungen ist es möglich und bevorzugt, dass die Magnetfeldquelle wenigstens einen zusätzlichen Dauermagneten umfasst. Durch einen Dauermagneten kann ein gezieltes statisches Magnetfeld erzeugt werden, um beispielsweise ein Grundmoment bestimmter Höhe zu erzeugen bzw. zu Verfügung zu stellen. Dieses Magnetfeld des Dauermagneten kann durch die elektrische Spule der Magnetfeldquelle gezielt verstärkt oder geschwächt werden, sodass das Magnetfeld vorzugsweise beliebig zwischen 0 und 100 % eingestellt werden kann. Daraus resultiert ein entsprechendes Bremsmoment, welches ebenfalls vorzugsweise zwischen 0 % und 100 % eingestellt werden kann. Bei abgeschaltetem bzw. auf einen geringen Wert reduziertem Magnetfeld ist es möglich, ein geringes Grundmoment zu erzeugen.

In bevorzugten Ausgestaltungen ist eine erste Verdrängerkomponente der Verdrängerkomponenten mit der Dämpferwelle fest verbunden und eine zweite Verdrängerkomponente der Verdrängerkomponenten ist in einem Gehäuse der Verdrängereinrichtung bzw. des Drehdämpfers aufgenommen. Dabei steht die erste Verdrängerkomponente insbesondere mit der zweiten Verdrängerkomponente im Eingriff und ist vorzugsweise exzentrisch zu der zweiten Verdrängerkomponente angeordnet. Das bedeutet, dass die Drehachse der ersten Verdrängerkomponente vorzugsweise exzentrisch zur Drehachse der zweiten Verdrängerkomponente angeordnet ist. In bevorzugten Ausgestaltungen ist die Dämpferwelle wenigstens abschnittsweise in einem Gehäuse der Verdrängereinrichtung bzw. in dem Gehäuse des Drehdämpfers aufgenommen.

Vorzugsweise weist die erste Verdrängerkomponente eine Außenverzahnung auf und die zweite Verdrängerkomponente weist eine Innenverzahnung auf. Dabei ist die zweite Verdrängerkomponente vorzugsweise drehbar in dem Gehäuse aufgenommen. In solchen Ausgestaltungen kann die erste Verdrängerkomponente auch als innere Verdrängerkomponente und die zweite Verdrängerkomponente als äußere Verdrängerkomponente bezeichnet werden.

Es ist bevorzugt, dass ein Innenraum der Verdrängereinrichtung einem wesentlichen Teil des Magnetfeldes der Magnetfeldquelle aussetzbar ist. Das bedeutet, dass insbesondere wenigstens ein Teil und vorzugsweise der wesentliche Teil des Innenraums und besonders bevorzugt der gesamte oder doch nahezu gesamte Innenraum der Verdrängereinrichtung dem Magnetfeld der Magnetfeldquelle aussetzbar ist.

In bevorzugten Weiterbildungen umfasst die Verdrängereinrichtung wenigstens einen Dämpfungskanal, der dem Magnetfeld der Magnetfeldquelle aussetzbar ist. Insbesondere ist der Dämpfungskanal einem Wesentlichen Teil des Magnetfeldes aussetzbar. Der Dämpfungskanal kann als Dämpfungsspalt ausgebildet sein oder wenigstens einen solchen umfassen.

In allen Ausgestaltungen ist es bevorzugt, dass ein Dämpfungsspalt bzw. zumindest ein Dämpfungsspalt als Dämpfungskanal radial zwischen der zweiten Komponente und dem Gehäuse angeordnet ist. Dieser Dämpfungsspalt erstreckt sich vorzugsweise in radialer Richtung zwischen der zweiten Komponente und dem Gehäuse und kann vorzugsweise als Ringspalt oder Ringkanal ausgebildet sein. Der Ringspalt bzw. der Ringkanal kann in mehrere Segmente unterteilt sein. Vorzugsweise ist der Dämpfungsspalt gezielt mit dem Magnetfeld der Magnetfeldquelle beaufschlagbar. Ein gezieltes Magnetfeld kann beispielsweise durch eine gezielte Stromstärke der elektrischen Pole erreicht werden.

Vorzugsweise durchtritt wenigstens ein wesentlicher Teil des Magnetfeldes der Magnetfeldquelle den Dämpfungsspalt. Das bedeutet, dass wenigstens ein wesentlicher Teil der Magnetfeldlinien des Magnetfeldes durch den Dämpfungsspalt durchtritt. Beispielsweise kann das magnetorheologische Fluid durch das Innere der Verdrängereinrichtung durchgeleitet werden und wird durch den Dämpfungsspalt zwischen dem Gehäuse und den Verdrängerkomponenten zurückgeleitet.

Vorzugsweise ist die zweite Verdrängerkomponente in dem Gehäuse über eine Mehrzahl an Führungseinheiten drehbar geführt. Dadurch kann ein definierter Dämpfungsspalt zwischen der zweiten Verdrängerkomponente und dem Gehäuse gewährleistet werden. Die Führungseinheiten sind vorzugsweise im Wesentlichen symmetrisch oder regelmäßig über dem Umfang der zweiten Verdrängerkomponente angeordnet. Jede Führungseinheit kann sich über einen Teil der axialen Länge der zweiten Verdrängerkomponente und auch über nahezu die gesamte oder die gesamte axiale Länge der zweiten Verdrängerkomponente erstrecken, um einen definierten Dämpfungsspalt zur Verfügung zu stellen. Die Führungseinheiten können als Gleiteinheiten oder als Lagereinheiten ausgebildet sein und sind über dem Umfang verteilt angeordnet. Die Führungseinheiten können als Gleitsteine ausgebildet sein und beispielsweise eine im Wesentlichen zylindrische Ausgestaltung aufweisen. Dabei ist es möglich, dass eine Seite stärker abgeflacht ist, um die an der Gehäuseinnenseite anliegende Fläche zu vergrößern. Die Gleitsteine können aus Messing, Bronze oder ähnlichen Materialien bestehen. Insbesondere weisen die Gleitsteine bzw. Führungseinheiten eine geringe magnetische relative Permeabilität auf. Dabei ist es möglich, dass der zum Beispiel als Ringspalt ausgebildete Dämpfungsspalt durch die Führungseinheiten in mehrere Spaltsegmente bzw. Winkelsegmente unterteilt wird.

Es kann auch nur ein segmentartiger Dämpfungsspalt zwischen der zweiten Verdrängerkomponente und dem Gehäuse ausgeführt werden, dieser muss sich nicht über den gesamten Umfang erstrecken.

Vorzugsweise weist das Gehäuse einen ersten und einen zweiten Endbereich und gegebenenfalls einen dazwischen angeordneten Mittelbereich (oder zwei oder mehr Mittelbereiche oder Gehäuseteile dazwischen) auf. In wenigstens einem der beiden Endbereiche und insbesondere in beiden Endbereichen ist (jeweils wenigstens) eine elektrische Spule aufgenommen. Dabei ist eine Achse der Spule insbesondere im Wesentlichen parallel zu der Dämpferwelle ausgerichtet. Die Achse der Spule kann eine Symmetrieachse sein oder beispielsweise eine Achse sein, die sich senkrecht auf dem Querschnitt der Spule erstreckt.

Besonders bevorzugt umfasst das Gehäuse an die Verdrängerkomponenten angrenzende Gehäuseabschnitte. Die Gehäuseabschnitte sind an den Stirnseiten der Verdrängerkomponenten (gegenüber voneinander) angeordnet und grenzen jeweils axial an die (seitlichen Enden der) Verdrängerkomponenten an bzw. sind durch einen geringen Axialspalt von den Verdrängerkomponenten getrennt.

Der Axialspalt erstreckt sich in radiale Richtung. Der Axialspalt weist vorzugsweise eine Breite in axialer Richtung auf, die größer ist als eine typische Größe der größten (Carbonyleisen-) Partikel innerhalb des magnetorheologischen Fluids (MRF). Dadurch wird sicher gestellt, dass ein Zermahlen, Verklemmen, ein Festfressen/-setzen oder dergleichen der Verdrängerkomponente an dem Gehäuseabschnitt nicht auftritt, da in den Axialspalt eindringende (Eisen- oder Carbonyleisen-) Partikel einen geringeren Außendurchmesser als die Spaltbreite aufweisen. Vorzugsweise ist die axiale Breite des Axialspaltes größer als 5 µm und insbesondere größer als 10 µm oder als 20 µm.

Es ist möglich und bevorzugt, dass an einem Endbereich die daran zugängliche oder daraus herausgeführte Dämpferwelle vorgesehen ist. Vorzugsweise wird die Dämpferwelle nur auf einer Seite aus dem Gehäuse herausgeführt.

In bevorzugten Weiterbildungen besteht das Gehäuse wenigstens zu einem wesentlichen Teil aus einem magnetisch leitenden Material mit einer relativen Permeabilität größer 100. Insbesondere ist die relative Permeabilität größer 500 oder größer 1000. Dabei ist es möglich, dass das gesamte Gehäuse aus einem solchen Material besteht oder doch im Wesentlichen oder wenigstens zu einem wesentlichen Teil. Besonders bevorzugt besteht wenigstens einer der an die Verdrängerkomponenten angrenzenden Gehäuseabschnitte aus einem magnetisch leitenden Material.

Vorzugsweise ist axial benachbart zu der elektrischen Spule in dem Gehäuse ein Ring aus einem Material mit einer relativen Permeabilität kleiner 10 angeordnet. Der Ring ist insbesondere axial zwischen der elektrischen Spule und den Verdrängerkomponenten angeordnet. Besonders bevorzugt befindet sich der Ring und/oder die elektrische Spule im Wesentlichen oder nahezu vollständig oder vollständig radial weiter außen als der sich zwischen der Verdrängerkomponente und dem Gehäuseabschnitt befindende Axialspalt. Unter "nahezu vollständig" wird hier verstanden, dass der Anteil radial außerhalb größer als 80% und insbesondere größer 90% beträgt. Besonders bevorzugt befindet sich der Ring axial benachbart und angrenzend an ein Mittelteil des Gehäuses. Die relative Permeabilität des Ringmaterials ist insbesondere kleiner 5 oder sogar kleiner 2. Der Ring besteht insofern vorzugsweise aus magnetisch nicht leitenden Materialien. Der Ring kann z. B. aus austenitischen Stählen bestehen. Das Material des Rings weist eine solche magnetische Permeabilität auf, dass ein magnetischer Kurzschluss des Magnetfeldes der Magnetfeldquelle zuverlässig verhindert wird.

Vorzugsweise durchtritt ein wesentlicher Teil des Magnetfeldes der Magnetfeldquelle durch einen bzw. den Axialspalt zwischen dem Gehäuse und wenigstens einer der Verdrängerkomponenten. Das bedeutet, dass auch der Axialspalt zwischen den Verdrängerkomponenten und dem Gehäuse einem wesentlichen Teil des Magnetfeldes der Magnetfeldquelle ausgesetzt ist. Dadurch wird eine Dichtwirkung innerhalb des Axialspaltes erzeugt und es wird zusätzlich auch die Dämpfung erhöht. Außerdem wird durch das Magnetfeld und die dadurch resultierende Dichtwirkung (Verkettung der Carbonyleisenpartikel) ein Druckverlust innerhalb des Axialspaltes durch überströmendes magnetorheologisches Fluid verhindert. Die Magnetfeldlinien verlaufen hierbei vorzugsweise quer zur Dichtfläche und nicht in Spalterstreckungsrichtung.

In bevorzugten Weiterbildungen ist das magnetorheologische Fluid durch Drehbewegung der ineinander eingreifenden Verdrängerkomponenten von einem Einlass der Verdrängereinrichtung zu einem Auslass der Verdrängereinrichtung förderbar. Es ist möglich, dass an dem Einlass und/oder dem Auslass jeweils wenigstens ein Drucksensor vorgesehen ist.

Vorzugsweise wird auf der Einlassseite der Verdrängereinrichtung die Dämpferwelle aus dem Gehäuse herausgeführt. Dort ist insbesondere eine Dichtung zwischen der Dämpferwelle und dem Gehäuse vorgesehen. Ein Herausführen der Dämpferwelle auf der Einlassseite ist vorteilhaft, da dort das magnetorheologische Medium bzw. Fluid angesaugt wird und somit auf der Saugseite ein geringerer Druck vorherrscht.

In allen Ausgestaltungen ist es besonders bevorzugt, dass der Einlass und der Auslass auf unterschiedlichen axialen Seiten der Verdrängereinrichtung angeordnet sind. Dadurch wird besonders zuverlässig ein möglicher Druckverlust durch einen unerwünschten direkten Übertritt des magnetorheologischen Fluides von dem Auslass zu dem Einlass vermieden. Möglich ist es aber auch, den Einlass und den Auslass auf derselben axialen Seite vorzusehen. Dann können der Einlass und der Auslass zum Beispiel jeweils etwa nierenförmig geformt sein, wobei zwischen dem Einlass und dem Auslass eine Abdichtung beispielsweise auch über das Magnetfeld der Magnetfeldquelle erfolgt.

In bevorzugten Ausgestaltungen ist das Magnetfeld in einem Bereich des Einlasses vorzugsweise schwächer ausgebildet als in einem Bereich des Auslasses. Diese Maßnahme beugt Kavitation vor.

Vorzugsweise ist wenigstens ein Ausgleichsvolumen vorgesehen, um einen Leckage- oder Temperaturausgleich zu ermöglichen. Ein solches Ausgleichsvolumen kann eine Luftblase umfassen oder kann ein anderes komprimierbares Material enthalten, um ein sich veränderndes Volumen des magnetorheologischen Fluids aufgrund von Temperaturunterschieden auszugleichen.

Vorzugsweise ist der Dämpfungskreislauf des magnetorheologischen Fluids vollständig innerhalb des Gehäuses angeordnet. Das bedeutet, dass vorzugsweise kein aussenliegender Einlass oder Auslass vorgesehen ist, durch welchen magnetorheologisches Fluid strömt. Allein zum Füllen oder Entleeren kann ein verschließbarer Zufluss und/oder Abfluss vorgesehen sein.

In allen Ausgestaltungen ist es möglich, dass wenigstens ein externes Dämpfungsventil mit wenigstens einem Ventilkanal als Dämpfungskanal vorgesehen ist. Dann ist das externe Dämpfungsventil über entsprechende Fluidleitungen mit der Verdrängereinrichtung verbunden.

In anderen Ausgestaltungen, bei denen kein externes Dämpfungsventil vorgesehen ist, ist es bevorzugt, dass in der Verdrängereinrichtung bzw. in dem Drehdämpfer ein im Wesentlichen abgeschlossenes Volumen vorliegt. Dadurch werden ein besonders einfacher Aufbau und u.a. wegen der dadurch benötigten geringen Menge an magnetorheologischem Fluid eine kostengünstige Herstellung ermöglicht.

In allen Ausgestaltungen ist es bevorzugt, dass ein Winkelsensor vorgesehen ist, der ein Maß für eine Winkelposition der Dämpferwelle erfasst. Ein Winkelsensor bzw. wenigstens ein Winkelsensor kann zum Beispiel als Absolutdrehwinkelgeber ausgebildet sein.

In bevorzugten Weiterbildungen ist wenigstens ein Belastungssensor zur Erfassung eines Kennwertes für ein Drehmoment an der Dämpferwelle vorgesehen (z.B. Drehmomentsensor).

Bevorzugt sind auch andere Sensorarten wie z. B Kraftsensoren, Geschwindigkeitssensoren oder Beschleunigungssensoren oder dergleichen mehr.

In allen Ausgestaltungen ist es bevorzugt, dass wenigstens ein mit der Dämpferwelle koppelbarer Elektromotor oder dergleichen vorgesehen ist. Ein solcher Elektromotor kann die Dämpferwelle gesteuert antreiben. Es ist auch möglich, Energie mit dem Elektromotor als Generator zu generieren, wenn die Dämpferwelle anders angetrieben wird. In allen Ausgestaltungen ist es auch möglich, wenigstens ein Vorsatzgetriebe einzusetzen.

Die Dämpferwelle kann in allen Ausgestaltungen direkt oder indirekt über zum Beispiel ein Getriebe mit einem Elektromotor koppelbar sein.

Der Drehdämpfer kann auch wenigstens zwei insbesondere hydraulisch miteinander verbundene Verdrängereinrichtungen umfassen. Dadurch können auch komplexere Vorgänge gesteuert werden.

Vorzugsweise ist wenigstens ein externer und insbesondere hydraulischer Aktor in Fluidverbindung mit der Verdrängereinrichtung vorgesehen. Dann kann durch die Verdrängereinrichtung gesteuert ein hydraulischer Aktor aktiviert werden.

Es ist möglich und bevorzugt, dass wenigstens ein Aktor als Kolben-Zylindereinheit ausgebildet ist. Dann kann durch die Verdrängereinrichtung der Aktor in die eine und gegebenenfalls auch in die andere Richtung bewegt werden.

Vorzugsweise umfasst der Drehdämpfer wenigstens eine Sensoreinrichtung bzw. es ist wenigstens eine Sensoreinrichtung dem Drehdämpfer zugeordnet. Die Sensoreinrichtung kann wenigstens einen Position- und/oder Abstandssensor zur Erfassung einer Position und/oder eines Abstands von umgebenden Objekten erfassen. Vorzugsweise ist die Steuereinrichtung dazu ausgebildet und eingerichtet, den Drehdämpfer in Abhängigkeit von den Sensordaten der Sensoreinrichtung zu steuern. Dadurch wird es beispielsweise möglich, den Drehdämpfer beim Einsatz zum Beispiel in einer Prothese in Abhängigkeit von dem Abstand zu Stufen oder Möbeln oder dergleichen zu steuern.

Vorzugsweise die Verdrängereinrichtung derart gestaltet, dass infolge einer Drehbewegung der Verdrängerkomponenten sich eine periodische Vergrößerung oder Verkleinerung des Verdrängerraums ergibt und somit ein Druck einstellt. Insbesondere wird die Höhe des Drucks durch die Magnetfeldeinheit bestimmt.

In allen Ausgestaltungen ist es bevorzugt, dass wenigstens ein Energiespeicher vorgesehen ist. Insbesondere ist der Energiespeicher wieder aufladbar. Der Energiespeicher ist insbesondere mobil ausgebildet und an dem oder in dem Drehdämpfer angeordnet oder darin integriert. Beispielsweise kann der Energiespeicher als Akkumulator oder Batterie ausgeführt sein.

In einer anderen Ausgestaltung des erfindungsgemäßen Drehdämpfers umfasst dieser wenigstens einen Verdrängerraum. Der Drehdämpfer weist eine Dämpferwelle und ineinander eingreifende Komponenten auf, wobei eine Drehbewegung der Dämpferwelle dämpfbar ist. Dabei enthält der Drehdämpfer wenigstens ein magnetorheologisches Fluid als Arbeitsfluid. Es ist eine Steuereinrichtung zugeordnet. Mit der Steuereinrichtung ist ein Magnetfeld einer wenigstens eine elektrische Spule umfassenden Magnetfeldquelle steuerbar. Durch das Magnetfeld ist das magnetorheologische Fluid beeinflussbar, um eine Dämpfung der Drehbewegung der Dämpferwelle einzustellen.

Die Erfindung ist auch ausgerichtet auf einer Vorrichtung umfassend wenigstens einen Drehdämpfer, so wie er zuvor beschrieben wurde. Beispielsweise kann der Drehdämpfer zur Dämpfung einer Drehbewegung zwischen zwei Komponenten dienen, wobei zum Beispiel eine Drehbewegung einer Autotür, oder einer Heckklappe eines Kraftfahrzeugs oder einer Flügeltür oder einer Motorhaube gedämpft wird. Möglich ist auch der Einsatz an einer Maschine, um daran Drehbewegungen zu dämpfen.

Die Vorrichtung kann wenigstens ein Wickelgerät wie eine Spulenmaschine oder eine Webmaschine mit wenigstens einem Drehdämpfer umfassen.

Vorzugsweise kann die Vorrichtung als Prothese ausgebildet sein und wenigstens einen Drehdämpfer umfassen, wie es zuvor beschrieben wurde. Eine Prothese kann für eine Hüfte, einen Fuß oder einen Arm vorgesehen sein und wenigstens ein Drehgelenk mit einem Drehdämpfer umfassen. Möglich ist auch der Einsatz bzw. die Ausbildung der Vorrichtung als Orthese, die wenigstens einen Drehdämpfer umfasst. In entsprechender Weise können auch Orthesen entsprechend ausgerüstet werden.

Die Vorrichtung kann auch als ein Gerät zur Unterstützung beim Sport, bei der Rehabilitation oder bei Fitnessübungen ausgebildet sein. Dabei ist wenigstens ein Drehdämpfer vorgesehen, wie es zuvor beschrieben wurde.

Eingesetzt werden kann die Erfindung auch bei Exoskeletten, Robotern, Motorrädern oder Fahrrädern. Bei Fahrrädern, um beispielsweise die Vorderrad- oder Hinterradschwinge eines Fahrrads zu dämpfen.

Die Erfindung ermöglicht es, Drehbewegungen einer Dämpferwelle zu dämpfen. Dabei kann die Dämpferwelle mehrere oder eine Vielzahl von Umdrehungen drehen.

Die hier beschriebenen Verdrängereinrichtungen können extrem kompakt bauen und sehr kostengünstig produziert werden. Es liegt ein großes technisches Interesse vor, Verdrängereinrichtungen für hohe Druckbereiche nutzbar zu machen. Um diese höheren Maximaldrücke effektiv erzeugen zu können, ist es zielführend, bessere Dichtmechanismen wie die bereits vorhandenen (mechanische Dichtwirkung über Spaltmaße) zu entwickeln. Das wird hier über das magnetorheologische Fluid (MRF) realisiert, welches als Arbeitsfluid in der Verdrängereinrichtung eingesetzt wird. Eine verbesserte Abdichtung wird erreicht, indem gezielt Bereiche der Verdrängereinrichtung bzw. Pumpe beim Einsatz mit MRF so magnetisiert werden, dass kritische Bereiche, wie der Bereich zwischen den Ein- und Ausstromkanälen (Einlass und Auslass), sowie die (Axial- und Radial-) Spalte, weniger Leckage aufweisen und somit höhere Maximaldrücke erreicht werden.

Dazu wird vorzugsweise wenigstens ein Teil der Spalte oder es werden alle Spalte mit der Magnetfeldquelle gezielt magnetisiert, sodass dadurch ein Dichtungseffekt entsteht und insbesondere die Spalte gedichtet werden. Dabei werden die Eisenpartikel des MRF speziell an diesen Stellen ausgerichtet übernehmen und eine zusätzliche Dichtwirkung.

Dadurch kann zwischen Saug- und Druckseite ein stirnseitiges Abdichten der Eisenpartikel bzw. bei den Spalten zu einem Abdichten im Spalt und an den Stirnseiten kommen.

Bei einem Drehdämpfer mit MRF wird ein Energieeintrag zur Druckerzeugung genutzt und darauffolgend der erzeugte Druck in einer magnetisierten Ventileinheit oder direkt in einem Dämpfungskanal, welches über den Strom der Magnetfeldquelle gesteuert oder geregelt ist, wieder abgebaut. Die eingeleitete Rotationsenergie wird über die Verdrängereinrichtung als Pumpe in einen Volumenstrom umgewandelt, wobei das gewünschte Bremsmoment über das elektromagnetische MRF-Regelventil bzw. den Dämpfungsspalt eingestellt wird.

Das Ergebnis ist ein Drehdämpfer, bei dem der Kraftverlauf stufenlos, variabel und sehr schnell über den Strom geregelt werden kann. Ein weiterer möglicher Vorteil ist, dass die gesamte Magnetisierung bereits in der Verdrängereinrichtung selbst erfolgen kann. Damit kann die Ventileinheit platzsparend integriert werden. Ein solcher hydraulischer Aufbau mit magnetisierender Verdrängereinrichtung und integriertem Hydraulikventil besitzt einen sehr einfachen Aufbau mit einer hohen Leistungsdichte und ist daher für viele technische Anwendungen eine interessante Lösungsvariante.

Es ist auch möglich, die Verdrängereinrichtung nicht zur unmittelbaren Druckerzeugung zu nutzen, sondern durch die Drehbewegung der Verdrängereinrichtung diese als Pumpe und durch die Magnetisierung der Spalte damit eine elektromagnetische Widerstandsarbeit zu verrichten. Diese Widerstandsarbeit kann über den Strom geregelt werden. Es kann auf eine separate Ventileinheit verzichtet werden. Die Vorrichtung kann sehr kompakt bauen.

Eine weitere Anwendungsmöglichkeit des Drehdämpfers ist der Einsatz im Hydraulikkreislauf. Ein Vorteil ist eine echtzeitfähige Steuerung eines Aktors wie z. B. eines Hydraulikzylinders. Die stufenlose Regelung der Ventileinheiten von 0 bis 100% im Millisekunden-Bereich ermöglicht eine sehr hohe Systemdynamik. Die Arbeitsweise der einzelnen Dämpfungskanäle zusammen mit der Magnetfeldquelle und deren Schaltlogik kann ähnlich aufgebaut werden, wie eine Brückenschaltung in der Elektronik.

Es ist in allen Ausgestaltungen möglich, dass der Einlass und der Auslass auf der gleichen Seite liegen. Bei kleinen oder sogar kleinsten Rillen oder Ungenauigkeiten kann aber ein Überströmen über den kleinen Zwischensteg stattfinden. Deshalb ist es günstiger, die Öffnungen für Einlass und Auslass auf verschiedene Stirnseiten zu legen, auch wenn die Axialspalte über das MRF abgedichtet werden. Vorzugsweise werden die Axialspalte an beiden Stirnenden über das magnetorheologische Fluid (MRF) abgedichtet.

Es ist auch möglich, eine Doppelpumpe aufzubauen, bei der der Druckkanal der einen Pumpe mit dem Saugkanal der anderen Pumpe verbunden ist. Dazwischen liegt das schaltbare MRF-Ventil. Die Dämpferwellen der beiden Pumpen bzw. Verdrängereinrichtungen sind verbunden. Statt einer breiten Pumpe mit dem Nachteil der langen Ansaugwege werden zwei schmalere gebaut, welche sich gegenseitig "anpumpen".

Betrachtet man die Arbeitsweise der Verdrängereinrichtung, so wird klar, dass in einer bestimmten Stellung und bei Betrachtung eines einzelnen "Zahnraumes" im Bereich des Einlasskanales sich das Zahnvolumen zunächst erhöht, wodurch das Arbeitsfluid angesaugt wird. Sobald bei der Weiterdrehung keine Kommunikation zwischen Einlass und Zahnraum mehr möglich ist, muss das Zahnvolumen annähernd gleich bleiben, da kein Volumenausgleich mehr möglich ist. Anschließend wird der Zahnraum in Richtung des Auslasses freigegeben. Durch den sich verkleinernden Zahnraum wird das Fördermedium komprimiert und es wird Druck aufgebaut.

Bei dem Drehdämpfer mit Saugseite und Druckseite an verschiedenen Stirnseiten wird das MRF von der eine Seite (Saugebene) zur anderen Seite (Druckebene) gefördert. Die Druckebene und die Saugebene sind über den Ringspalt radial zwischen der zweiten Verdrängerkomponente und der Innenseite des Gehäuses verbunden. Dieser Dämpfungsspalt wird als "MRF-Ventil" verwendet. Bei Beaufschlagung eines Magnetfeldes im Magnetspalt wird eine Druckdifferenz erzeugt und das Antriebsmoment erhöht sich.

Sich zueinander bewegende Teile benötigen zur einwandfreien Funktion in der Regel Laufspiele (Spalte). So muss ein Radialspalt zwischen einem Außenzahnprofil und einem Innenzahlprofil (Außenrotor zu Innenrotor) bestehen. Besonders die stirnseitigen (Axial-) Spalte sind für die Höhe des Druckaufbaus maßgebend, so sollte es kein oder nur wenig Überströmen geben. Um die Verluste durch interne Leckage möglichst gering zu halten, werden vorzugsweise sämtliche Trenn-/Übergangs/Spaltstellen in der Verdrängereinrichtung mit einem Magnetfeld beaufschlagt, wodurch sich durch die MR-Flüssigkeit eine zusätzliche Abdichtung ergibt (quasi eine Magnetdichtung). Dadurch kann die Verdrängereinrichtung mit größeren Toleranzen und somit kostengünstiger gefertigt werden bzw. es werden bei kleinen Toleranzen höhere Drücke (Bremsmomente) erreicht. Zudem werden so auf einfache Weise niedere Leerlaufdrücke (große Spalte bei OFF-State) und hohe Maximaldrücke (Bremsmomente) bei Bestromung (ON-State) erreicht.

Für die Teile der Verdrängereinrichtung aus magnetisch leitendem Material eignet sich z. B. S235.

Bei der Verwendung eines aktiven Systems an einer Prothese können zusätzliche Funktionen der Prothese erfüllt werden, so z. B. das Aufstehen des Patienten. Des Weiteren ist es möglich, eine Energierückgewinnung umzusetzen. Das von außen eingeleitete Drehmoment z. B. beim Hinsetzen wird über den Drehdämpfer, der in diesem Fall als Pumpe dient, in "hydraulische Energie" umgewandelt und kann anschließend in elektrische Energie umgewandelt werden, indem der Antriebsmotor als Generator verwendet wird oder indem die "hydraulische Energie" in einem Druckspeicher gespeichert wird.

Es ist in allen Fällen bei Einsatz mehrerer Aktoren möglich, die verschiedenen Aktoren "intelligent" zu vernetzen. So kann der Bremsdruck in einer Einheit zum Betätigen der anderen Einheit genutzt werden, sodass ein harmonischer Bewegungsablauf möglich ist. So können bei Prothesen das Knie mit der Hüfte oder dem Fuß "vernetzt" werden. Es können aber auch bei einem Exoskelett oder Roboter alle Gelenke miteinander verknüpft werden.

Ein Ausgleichsvolumen für einen Temperatur- und/oder Leckageausgleich wird vorzugsweise auf der Ansaugseite angeordnet, da dort ein niedrigeres Druckniveau anliegt. Auf der Ansaugseite kann das Magnetfeld schwächer sein, damit keine Kavitation beim Ansaugen entsteht. Zwar handelt es sich um einen geschlossenen Kreislauf, aber bei Temperaturänderungen, Dehnungen erhöht dies die Sicherheit.

MRF-Kupplungen nach dem Stand der Technik sind zylindrische Aktoren, bei welchen sich Scheiben im MRF drehen. Außer bei sich durch die Rotation ergebenden Strömungsbewegungen bleibt die MR-Flüssigkeit immer drucklos im MRF-Raum liegen. Eine notwendige Kühlung, um die Energie abzuführen, ist nur über das Außengehäuse möglich. Bei dem erfindungsgemäßen Drehdämpfer mit äußerem Dämpfungsventil strömt das MRF über Leitungen und wird in der Verdrängereinrichtung als Arbeitsfluid eingesetzt. Somit kann hier ein separater Kühler eingebaut werden.

Für Anwendungen mit nur kurzen Laufzeiten (z. B. <100ms) genügen weiche Materialien mit geringer Oberflächenhärte der Bauteile. Wegen der gewünschten magnetischen Eigenschaften sind hier niederlegierte Stähle vorteilhaft. Für längere Anwendungen sollte die Oberflächenhärte höher sein, was z. B. durch Hartchromschichten oder Vergleichbares erzielt werden kann.

Der Einsatz des Drehdämpfers ist auch bei Wickelgeräten z. B. beim Spulenwickeln oder bei Webmaschinen möglich. Soll z. B. ein Medium wie z. B. Papier, Faden oder dergleichen mit gleichbleibender Zugspannung auf eine Rolle aufgewickelt werden, so kann dies mit der Erfindung durch Variation des Antriebs- oder Bremsmomentes entsprechend der Durchmesseränderung der Aufwickelrolle erzielt werden.

Die Erfindung kann auch bei Fitness-, Rehabilitations- oder Sportgeräten eingesetzt werden, so z. B. bei Gewichthebegeräten, Rudergeräte, Fahrradtrainern, Laufbändern, Zughebegeräten etc.

Weitere Einsatzgebiete sind adaptive Bremsen bei Fitnessgeräten (z. B. Rotation), bei Fahrradtrainern, Laufbändern, für Hebel beim Gewichtheben, an Rudermaschinen oder bei der Umsetzung von Linearbewegungen in Rotation, wie z. B. beim Gewichtheben.

Möglich ist es auch, einen Winkelsensor einzusetzen, um eine weg- oder winkelabhängige Gegenkraft oder ein weg- oder winkelabhängiges Gegenmoment einzustellen. Bei den heutigen Fitnessgeräten (primär mit Gewichten) bleibt die Gegenkraft (Gegenmoment) über den Verfahrweg-/winkel gleich (Erdanziehung). Mit dem Drehdämpfer ist es möglich, die Kraft entsprechend der optimalen Wirkung für den Muskel bzw. Menschen anzupassen. Dies kann auch abhängig von den Stellungen der Gelenke sein. Es ist möglich und kann von Vorteil sein, wenn die Gegenkraft langsam steigt oder fällt, damit es nicht zu Lastspitzen usw. kommt.

In allen Ausgestaltungen ist es möglich, den Drehdämpfer bzw. eine damit ausgerüstete Vorrichtung mit einem Computer oder einem handgehaltenen Computer, wie einem Smartphone/Smartdevice zu verknüpfen und/oder Daten oder Einstellungen zu protokollieren oder auch Einstellungen vorzunehmen. Im Computer/Smartphone kann immer die ideale Einstellung programmiert sein. Sobald man ins Fitnesscenter oder zur Reha kommt, kann man diese auf das Fitnessgerät aufspielen und später die Daten auswerten. Auch einen zeitlichen Verlauf (Trainingserfolg).

Weitere Vorteile sind Gewichtsersparnis, da die Geräte leichter werden. Der Drehdämpfer kann volladaptiv und vernetzbar sein. Kraft über Weg (Arbeit) bzw. in einer bestimmten Zeit (Leistung) wird gemessen und berücksichtigt. Ein Vergleich mit anderen übers Internet kann erfolgen.

Ein Update der Profile über ein Netzwerk oder das Internet ist möglich. So können Ergebnisse ausgetauscht und neue Kennlinien eingespielt werden.

Bei Rehabilitationsgeräten können Funktionen wie bei den zuvor beschriebenen Sportgeräten implementiert sein, aber diese können hinsichtlich schneller und guter Genesung optimiert sein.

Für Prothetik werden oftmals ca. 60 bis 150 Nm Bremsmoment benötigt, was der Drehdämpfer in geeigneter Auslegung bereitstellen kann.

Mit dem Drehdämpfer bzw. einer damit ausgerüsteten Einrichtung kann eine Bewegungsumsetzung von rotativ nach linear oder über Hebel in andere Bewegungsformen erfolgen. Es ist auch denkbar, den Drehdämpfer an einem Minenschutzsitz einzusetzen.

Der Drehdämpfer kann auch an Kraftfahrzeugen zur Dämpfung der Drehbewegung einer Tür oder anderer Bauteile eingesetzt werden. So kann z. B. der Drehdämpfer in der A-Säule ohne Einsatz eines Getriebe eingesetzt werden, um die Tür beim Öffnen oder Schließen zu bremsen.

Bei dem Einsatz an z. B. einer Autotür ist auch ein semiaktives oder aktives System möglich. Dabei kann die Erfindung als Vorrichtung und insbesondere als Türkomponente ausgebildet sein. Dabei umfasst die Türkomponente wenigstens einen steuerbaren und ein magnetorheologisches Fluid als Arbeitsfluid enthaltenden Drehdämpfer. Der Drehdämpfer umfasst eine Verdrängereinrichtung mit einer Dämpferwelle und mit ineinander eingreifenden Verdrängerkomponenten. Die Verdrängereinrichtung enthält wenigstens ein magnetorheologisches Fluid als Arbeitsfluid und ist damit betreibbar. Während einer Relativdrehung der Verdrängerkomponenten zueinander verdrängen diese das magnetorheologische Fluid. Es ist wenigstens eine Magnetfeldquelle umfasst. Die Magnetfeldquelle weist wenigstens eine elektrische Spule auf. Ein Magnetfeld der Magnetfeldquelle ist steuerbar und somit eine Drehbewegung der Dämpferwelle gesteuert dämpfbar. Der Drehdämpfer umfasst zwei relativ zueinander bewegbare Anschlusseinheiten, wobei eine der beiden Anschlusseinheiten mit einer Tragkonstruktion und die andere der beiden Anschlusseinheiten mit einer bewegbaren Türeinrichtung, insbesondere eines Fahrzeugs, verbindbar ist, um eine Bewegung einer bewegbaren Tür zu dämpfen. Der Drehdämpfer ist mit einer Antriebseinrichtung gekoppelt, mit welcher die Türeinrichtung aktiv in wenigstens eine Richtung bewegbar ist. Vorzugsweise kann die bewegbare Tür in beide Richtung aktiv gesteuert bewegt werden. Zum Antrieb eignet sich insbesondere ein mit dem Drehdämpfer gekoppelter Elektromotor. Ein solcher Elektromotor kann direkt oder über ein Getriebe mit der mit der Dämpferwelle gekoppelt sein.

Der Einsatz ist auch an Zweirädern an der Hinterradschwinge oder der Vorderradschwinge möglich.

Bei Kraftfahrzeugen oder im Rennsport kann der Drehdämpfer auch in einem Stabilisator bzw. als Teil eines eingesetzt werden.

Es ist eine Kombination der Verdrängereinrichtung mit einem Elektromotor (plus Getriebe) oder/und Druckspeicher möglich, sodass nicht nur semiaktive, sondern auch aktive Anwendungen möglich sind. Ein ganz erheblicher Vorteil bei einer solchen Kombination ist, dass der Elektromotor nur ein erheblich geringeres Drehmoment aufbringen können muss als der Drehdämpfer abbremsen kann. Dadurch kann ein Elektromotor eingesetzt werden, der gegebenenfalls über ein Vorsatzgetriebe direkt an den Drehdämpfer gekoppelt wird. Der Elektromotor und auch das Vorsatzgetriebe können kostengünstig ausgeführt werden, da sie für geringe Belastungen ausgelegt sind. Der Drehdämpfer hingegen eignet sich für erheblich höhere Abbremsmomente und kann ebenfalls kostengünstig realisiert werden. Die entstehenden Gesamtkosten sind viel geringer als bei Ausführung mit einem Elektromotor, der entsprechende Bremsmomente erzeugen kann.

Möglich ist auch der Einsatz eines thermischen Aktors (Formgedächtnis) als "aktiver" Aktor.

Bevorzugt ist die Auslegung für einen Kurzzeitgebrauch wie für eine Crashanwendung, d. h. für Zeiträume zwischen z. B. 20ms und 100 ms. Insbesondere dauert der zu dämpfende Vorgang kürzer als 100 ms an. Vorzugsweise wird keine Kühlung verwendet.

Es ist möglich und bevorzugt, das MRF zu fördern oder zu pumpen. Vorzugsweise liegt ein geschlossener Kreislauf vor, bei dem eine Drehbewegung gedämpft oder gebremst wird.

In allen Ausgestaltungen können die von der Verdrängereinrichtung erzeugten Druckschwankungen über eine Regelung der Magnetfeldstärke der Magnetfeldquelle geglättet werden. Solche Druckschwankungen können entstehen, da kein konstanter Volumenstrom durch das Zahnprofil der Verdrängerkomponenten vorliegt.

Die Erfindung ist auch ausgerichtet auf eine Vorrichtung oder eine Maschine mit magnetorheologischer Flüssigkeit als Arbeitsmedium, die bei Drehzahlen über 500 1/min stufenlos ein adaptives Bremsmoment mit bis zu 50 Nm (oder mehr) erzeugen kann. Die Erfindung ist auch ausgerichtet auf eine Vorrichtung oder eine Maschine mit magnetorheologischer Flüssigkeit als Arbeitsmedium, die bei Drehzahlen über 2.000 1/min stufenlos adaptive Bremsmomente mit bis zu 100 Nm oder 130 Nm erzeugen kann.

Eine Vorrichtung gemäß der Erfindung erzeugt bei mehreren hundert Umdrehungen pro Minute hohe Bremsmomente insbesondere größer 50 Nm oder größer 100 Nm. Dabei tritt konstruktionsbedingt keine wesentliche Separation der Bestandteile des MRF auf.

In einer bevorzugten Ausgestaltung ist die Erfindung auf eine Sicherheitslenksäule eines Kraftfahrzeuges ausgerichtet, wobei die Sicherheitslenksäule zwei relativ zueinander bewegbare Einheiten und wenigstens einen Drehdämpfer, wie es zuvor beschrieben wurde, umfasst.

Insgesamt bietet die Erfindung viele Vorteile und Anwendungsmöglichkeiten. MRF Bremsen nach dem Stand der Technik mit zwei oder mehreren zueinander bewegten Scheiben nach dem Kupplungsscheibenprinzip bzw. nach dem MRF-Scherprinzip bauen groß, sind im Aufbau komplex und können nicht mit mehreren hundert Umdrehungen pro Minute betrieben werden, da die magnetorheologische Flüssigkeit zentrifugiert. Die Erfindung stellt ein neues Wirkprinzip mit besseren Performancedaten zur Verfügung. Eine solche MRF-Bremse kann mit hohen bis sehr hohen Drehzahlen von bis zu und mehr als 2.000 Umdrehungen/min betrieben werden, baut um ein Vielfaches kleiner und einfacher als der Stand der Technik und lässt sich kostengünstig herstellen.

Ein erster Prototyp erreichte auf dem Prüfstand mehr als 25 Nm Bremsmoment mit den Abmessungen Durchmesser 65 und Länge 60mm.

Durch Skalierung kann das Moment nach Belieben variiert werden. Die Baulänge der Bremseinheit (jetzt 20 mm breit) geht linear ein und der Durchmesser progressiv. Ein solcher Drehdämpfer kann in beide Drehrichtungen betrieben werden.

Der erste Prototyp weist ein Grundmoment von ca. 1 Nm ohne Bestromung auf. Es sind Drehzahlen > 2.000 1/min möglich. Der Spulenwiderstand beträgt beim konkreten Prototypen 1,6 Q. Dadurch ergibt sich eine Leistung von 1,6 W bei einem Strom von 1000 mA und ein Bremsmoment von 15 Nm. Es ergibt sich eine Leistung von 6,4 W bei 2000 mA mit einem Bremsmoment von 21 Nm. Eine Leistung von 10 W ergibt sich bei einem Strom von 2500 mA mit einem Bremsmoment von 24 Nm.

Es ergibt sich ein extrem großer Arbeitsbereich mit einem Faktor von 25 zwischen Minimal- und Maximalkraft. Dadurch ergibt sich mehr Spielraum bei der Minimalkraft und es ist eine geringe Kraft bei tiefen Temperaturen möglich. Es ergibt sich ein breiterer Einsatzbereich, so sind z. B. verschiedene Geräte mit dem gleichen System abdeckbar. Der Drehdämpfer kann in beiden Drehrichtungen verwendet werden. Es sind mehrere Umdrehungen möglich, d. h. er muss beim Einbau nicht genau positioniert werden. Der Start und die Endposition sind beliebig. Der gleiche Aktor kann bei verschiedenen Verfahrwegen und Umdrehungen eingesetzt werden, was durch das Gleichteilekonzept den Drehdämpfer kostengünstiger macht.

Ein Vorteil ist weiterhin, dass es sich um ein in sich geschlossenes und dichtes System handelt, was auch Vorteile bei der Alterung mit sich bringt.

Aufgrund des anderen Wirkprinzips (pumpen = mischen) ist eine Sedimentation unproblematisch bzw. tritt nicht auf.

Der Drehdämpfer ist weiterhin kostengünstig herstellbar.

Eine Umsetzung von einer Linearbewegung in eine Drehbewegung kann über ein Ritzel und eine Zahnstange erfolgen, denkbar sind auch Gewindespindeln oder andere Umsetzungsgetriebe. So kann z. B. eine energieabsorbierende/-umwandelnde Bewegung einer Sicherheitslenksäule bei einem Unfall gezielt gedämpft werden, in dem ein mit dem adaptiven Drehdämpfer gekoppeltes Zahnrad mit einer Zahnstange kämmt, die mit der Lenksäule verbunden ist. Darüber kann im Schadensfall (Crash, Kollision...) eine effektive Dämpfung der teleskopierenden Sicherheitslenksäule, und damit eine verletzungsmindernde Insassenrückhaltung, erreicht werden. Wird der Drehdämpfer mit einem Elektromotor gekoppelt kann so auch eine aktive Bewegung der Lenksäule nicht nur im Schadensfall, sondern auch im Normalbetrieb ermöglicht.

Wenn das System geregelt werden soll, ist ein einfacher und kostengünstiger Wegsensor möglich, da Drehgeber in der Regel viel einfacher und kostengünstiger wie lineare Wegmesssysteme sind.

Insgesamt ist der Drehdämpfer z. B. als Rotationshydraulik, MRF-Rotationsbremse, MRF-Pumpe, MRF-Bremse, MRF-Dämpfer, passiver oder aktiver MRF-Aktor einsetzbar.

Die Anwendung kann auf unterschiedlichen technischen Gebieten erfolgen. Der Drehdämpfer kann z. B. als Crashabsorber, in der Hydraulik, an oder in Prothesen, an oder in oder für Roboter oder an oder in oder für Exoskelette einsetzbar. Weiterhin kann der Drehdämpfer an einem (aktivem) Fahrwerk oder an einem Motorrad oder Fahrrad z. B. an der Hinterradschwinge eingesetzt werden.

Weitere Vorteile und Merkmale der vorliegenden Erfindung ergeben sich aus den Ausführungsbeispielen, die mit Bezug auf die beiliegenden Figuren im Folgenden erläutert werden.

In den Figuren zeigen:
- Fig. 1: erfindungsgemäße Drehdämpfer an Prothesen;
- Fig. 2: einen erfindungsgemäßen Drehdämpfer beim Einsatz an einem Sportgerät;
- Fig. 3: der Drehdämpfer aus Figur 1 oder 2 in einem Teilschnitt;
- Fig. 3b: eine schematische Draufsicht auf einen Endbereich des Gehäuses des Drehdämpfers nach Figur 1;
- Fig. 4: eine Explosionsdarstellung eines Schnittes des Drehdämpfers nach Figur 3;
- Fig. 5: die Darstellung gemäß Figur 4 mit eingezeichneten Magnetfeldlinien;
- Fig. 6: einen weiteren Drehdämpfer in einer stark schematisch geschnittenen Darstellung;
- Fig. 7: ein weiteres Ausführungsbeispiel eines Drehdämpfers;
- Fig. 8: noch ein Ausführungsbeispiel eines aktiven Drehdämpfers;
- Fig. 9: ein weiteres Ausführungsbeispiel eines aktiven Drehdämpfers;
- Fig. 10: ein Übersichtsschaubild über den Einsatz in einem aktiven Hydraulikkreislauf; und
- Fig. 11: den Hydraulikkreislauf nach Fig. 11 in einer anderen Ventilstellung.

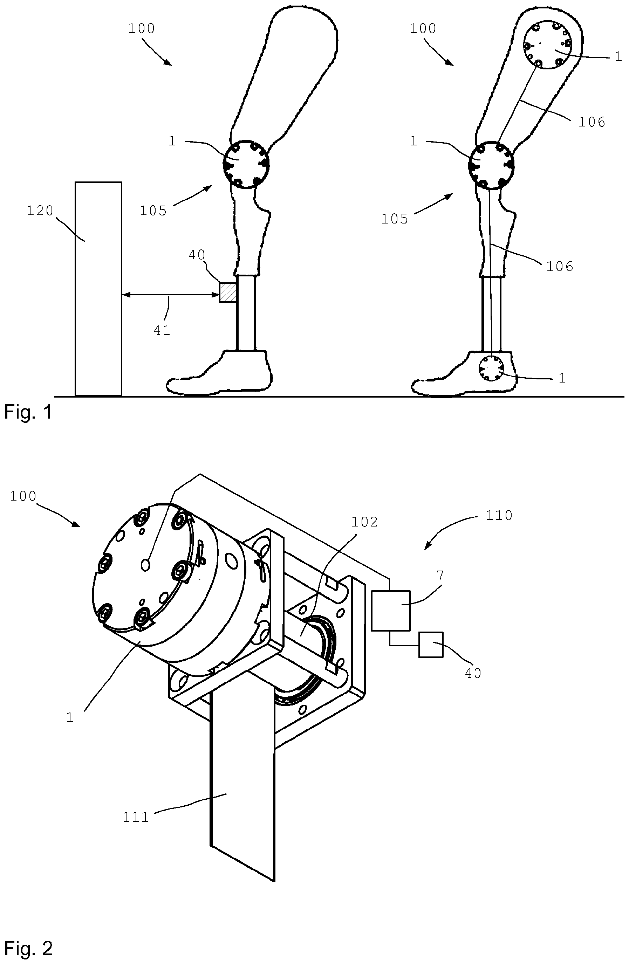

Figur 1 zeigt den Einsatz eines erfindungsgemäßen Drehdämpfers 1 an Prothesen 105 als Vorrichtungen 100. Dabei zeigt die in der linken Hälfte dargestellte Prothese 105 den Einsatz an einem Kniegelenk, wo der Drehdämpfer 1 Drehbewegungen zwischen dem Oberschenkel und dem Unterschenkel dämpft.

Die Steuerung des Drehdämpfers 1 kann auch über Sensordaten einer Sensoreinrichtung 40 erfolgen, die beispielsweise einen Abstand 41 zu einem Objekt 120 erfasst. Wird beispielsweise beim Treppensteigen der Abstand und die Höhe der jeweils folgenden Stufe durch eine solche Sensoreinrichtung 40 erkannt, kann der Drehdämpfer 1 gezielt auf die jeweils danach folgende Anforderung eingestellt werden.

In der rechten Hälfte von Figur 1 ist eine Beinprothese als Prothese 105 abgebildet, bei der hier drei Drehdämpfer 1 vorgesehen sind, nämlich einer im Fußgelenk, einer im Kniegelenk und einer am Hüftgelenk. Die drei Drehdämpfer 1 sind über eine oder mehrere Fluid- und Steuerleitungen 106 miteinander verbunden, sodass auch eine hydraulische Interaktion zwischen den einzelnen Drehdämpfern 1 möglich ist, deren Funktion später noch beschrieben wird.

Figur 2 zeigt den Einsatz eines Drehdämpfers 1 an einer Vorrichtung 100 wie beispielsweise an einem Sportgerät 110 (z.B. Gurtzugstation, Lastzuggerät, Kraftstation, Chest Press...) welches beim Sport oder bei der Rehabilitation oder bei Fitnessübungen oder dergleichen eingesetzt werden kann. Hier weist das Sportgerät 110 ein Band 111 auf, welches von einer Seilrolle 102 abgewickelt bzw. darauf aufgewickelt werden kann.

Der Drehdämpfer 1 kann von einer Feder oder einem hier nicht sichtbaren Elektromotor 35 gegebenenfalls unterstützt ein gezieltes Aufwickeln bzw. Abwickeln des Bandes 111 dämpfen bzw. steuern. Die Steuerung übernimmt die zugeordnete Steuereinrichtung 7, die auf Daten der Sensoreinrichtung 40 und gegebenenfalls weitere Sensoren zurückgreift.

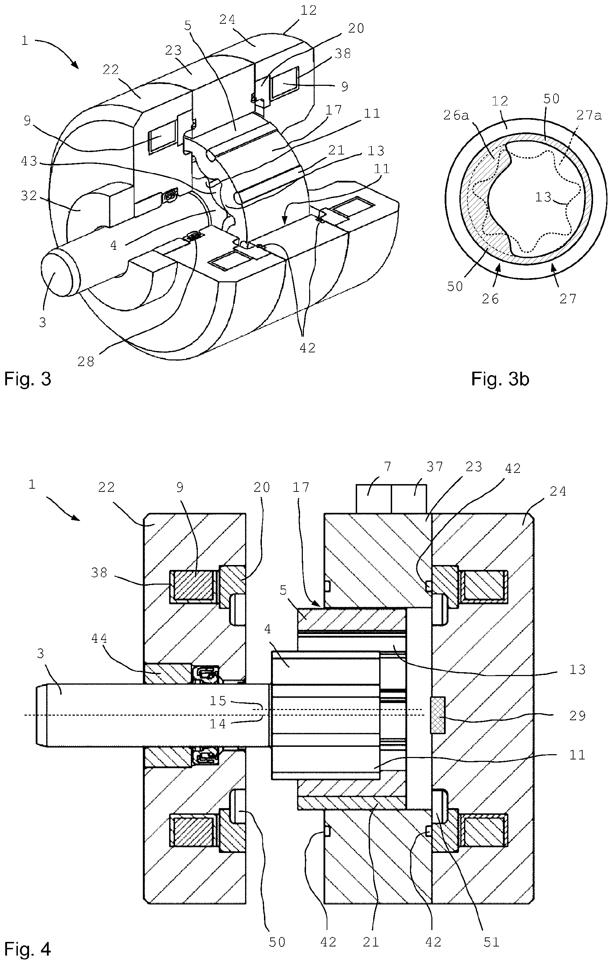

Figur 3 zeigt einen Teilschnitt des Drehdämpfers 1 aus Figur 2, wobei die Außenverzahnung 11 der ersten Verdrängerkomponente 4 und auch die Innenverzahnung 13 der zweiten Komponente 5 erkennbar sind.

Hier ist auch erkennbar, dass das Gehäuse 12 des Drehdämpfers 1 drei Abschnitte umfasst, nämlich einen ersten Endbereich 22, ein Mittelbereich 23 und einen zweiten Endbereich 24. Hier wird jeder Bereich durch ein separates Teil gebildet. Möglich ist es zwar auch, dass noch mehr Teile vorgesehen sind, oder dass insgesamt nur zwei Gehäusehälften vorgesehen sind.

In dem Gehäuse 12 sind in dem hier linken Endbereich 22 und in dem hier rechten zweiten Endbereich 24 jeweils eine elektrische Spule 9 jeweils in einem Spulenhalter 38 aufgenommen. Die Magnetfelder der elektrischen Spulen 9 dienen zur Beeinflussung des im Inneren der Verdrängereinrichtung vorhandenen magnetorheologischen Fluides. Hier werden mit den Magnetfeldern der elektrischen Spulen 9 beide stirnseitigen Axialspalte 25 abgedichtet.

Der Drehdämpfer 1 baut extrem kompakt und kann sehr kostengünstig produziert werden und kann in hohen Druckbereiche bis 100 bar und 200 bar und darüber hinaus genutzt werden, wenn die Dimensionierung entsprechend ist. Zu Erzeugung solcher hohen Maximaldrücke werden Dichtmechanismen ergriffen. Es werden günstige mechanische Spaltmaße eingesetzt. Außerdem werden gezielt Bereiche der Verdrängereinrichtung und des Gehäuses 12 so bedarfsweise magnetisiert, dass kritische Bereiche, wie der Bereich zwischen den Ein- und Ausstromkanälen, sowie die Axialspalte 25 weniger Leckage aufweisen und somit höhere Maximaldrücke erreicht werden. Dabei können die Zwischenbereiche von Einlass und Auslass, sowie die Axialspalte so magnetisiert werden, dass die Eisenpartikel des MRF speziell an diesen Stellen ausgerichtet werden und eine erhebliche zusätzliche Dichtwirkung übernehmen.

An den Axialspalten 25 neben der Saugniere und der Druckniere führt das Magnetfeld zu einem stirnseitigen Abdichten durch ein Vernetzen und Ausrichten der Eisenpartikel. Die stirnseitigen Axialspalte 25 werden zuverlässig auch gegen hohe Drücke abgedichtet. Die Leckage zwischen Druck- und Saugseite ist gering.

Die Optimierung der Dichtwirkung ermöglicht den Einsatz von Zahnringpumpen als rotativen MRF-Dämpfern. Es wird ein kleinbauender und günstiger Drehdämpfer ermöglicht.

Bei einer MRF-Dämpfereinheit wird ein Energieeintrag zur Druckerzeugung genutzt und darauffolgend der erzeugte Druck in einer magnetisierten Ventileinheit, welches über den Strom geregelt ist, wieder abgebaut. Die eingeleitete Rotationsenergie wird über die Pumpe in einen Volumenstrom umgewandelt, wobei das gewünschte Bremsmoment über ein elektromagnetisches MRF-Regelventil eingestellt wird. Hier wird der Volumenstrom direkt innerhalb des Gehäuses gedämpft.

Das Ergebnis ist ein Drehdämpfer 1, bei dem der Kraftverlauf stufenlos, variabel und sehr schnell über den Strom geregelt werden kann. Die gesamte Magnetisierung kann bereits in dem Drehdämpfer 1 selbst erfolgen und erlaubt eine platzsparende Integration der Ventileinheit. Ein solcher hydraulischer Aufbau mit magnetisierender Pumpeneinheit besitzt einen sehr einfachen Aufbau mit einer hohen Leistungsdichte und ist für viele technische Anwendungen eine interessante Lösungsvariante.

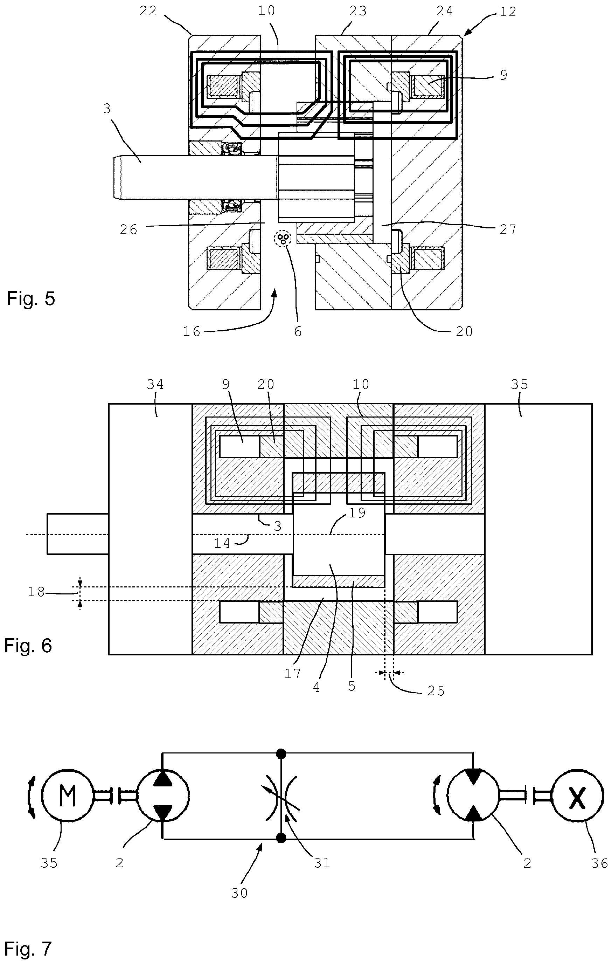

Axial benachbart zu jeder elektrischen Spule 9 ist ein Ring 20 vorgesehen, wobei die Ringe 20 zwischen den beiden Spulen 9 angeordnet sind und hier jeweils von außen an den Mittelbereich 23 angrenzen. Die Ringe 20 sind axial benachbart zu den elektrischen Spulen 9 angeordnet, um dort einen magnetischen Kurzschluss zu verhindern, wie mit Bezug auf die Figuren 4 und 5 im Folgenden noch genauer erläutert werden wird.

An der Dämpferwelle 3 ist ein Winkelsensor 32 vorgesehen, der beispielsweise als Absolutdrehwinkelgeber ausgeführt sein kann. Die Dämpferwelle 3 ist über eine Dichtung 28 zum Innenraum 16 hin abgedichtet. Zwischen den Gehäuseteilen der unterschiedlichen Bereiche sind umlaufenden Dichtungen 42 angeordnet, um den Austritt von magnetorheologischen Fluid aus dem Innenraum der Verdrängereinrichtung 2 hier radial nach außen durch die Grenzflächen zwischen den Teilen 22, 23 und 24 zu verhindern.

Die zweite Verdrängerkomponente 5 mit einer insgesamt etwa zylindrischen Außenform weist auf dem Außenumfang mehrere Führungseinheiten 21 auf, die sich hier im Ausführungsbeispiel über die vollständige axiale Länge erstrecken, können in anderen Ausführungen aber auch zum Beispiel kürzer ausgebildet sein. Die Führungseinheiten 21 stehen radial nach außen über die zweite Verdrängerkomponente 5 bzw. das Kernmaterial der zweiten Verdrängerkomponente 5 nach außen über und sorgen für einen definierten radialen Abstand zwischen der Außenoberfläche des Kernmaterials der zweiten Verdrängerkomponente 5 und dem Innenumfang des Gehäuses 12 an dem Mittelbereich 23.

Figur 3b zeigt eine stark schematische Draufsicht auf einen Endbereich 22 oder 24 des Gehäuses 12 des Drehdämpfers 1 nach Figur 1, wobei der innere Aufbau des Drehdämpfers 1 und die Strömungsführung deutlicher wird. Die Zeichnung zeigt z. B. den Endbereich 22 in einer Draufsicht von innen, aber ohne die Verdrängerkomponente 4. Die Innenkontur 13 der äußeren Verdrängerkomponente 5 ist gestrichelt eingezeichnet und kann in unterschiedlichen Ausgestaltungen mehr oder weniger Zähne aufweisen. Radial außerhalb der radial äußersten Zahnkontur der Verdrängerkomponenten 4 und 5 ist hier eine Umfangsnut 50 in dem Endbereich 22 (und 24) vorgesehen, die sich in dem Endbereich 22 (und 24) vollständig um die Achse herum erstreckt. Diese Umfangsnut 50 dient als Sammel- (50) bzw. Verteilkanal (51) für das MRF. Die Umfangsnut kann sich aber auch nur über Teilbereiche des Umfangs erstrecken.

Auf der hier in der Zeichnung linken Seite ist auf der Saugseite 26 bzw. an dem Einlass eine Saugniere 26a ausgebildet, durch die das MRF in den Zwischenraum 43 zwischen der Innenverzahnung 13 und der Außenverzahnung 11 angesaugt werden kann. Das durch die Saugniere 26a angesaugte MRF strömt dazu von der Druckseite 27 durch den Dämpfungskanal 17 bzw. dessen Teilsegmente zu der Saugseite 26. Der Dämpfungskanal 17 erstreckt sich dabei über (nahezu) den vollständigen äußeren Umfang der äußeren Verdrängerkomponente 5. Es können an dem vollständigen Umfang z. B. die schmalen Segmente der Führungseinheiten 21 fehlen.

Die Ansaugniere 26a und die in dem anderen Endbereich an der anderen Stirnseite ausgebildete Druckniere 27a erstrecken sich jeweils etwa nierenförmig über einen Winkelbereich <180°, wie es bei Zahnringpumpen oder Gerotorpumpen üblich ist. Die Umfangsnut 50 und die Ansaugniere 26a bilden zusammen einen Zufuhrkanal, während die Umfangsnut 51 und die Druckniere 27a zusammen einen Abfuhrkanal bilden.

Die Sammelnut 50 auf der Saugseite und die Sammelnut 51 sammeln auf der Saugseite das MRF und geben es auf der Druckseite über dem vollständigen Umfang ab. Ein "Übersprechen" bzw. ein Fluidkurzschluss wird dadurch ausgeschlossen, dass die Sammelnuten 50 und 51 auf unterschiedlichen Stirnseiten angeordnet sind, sodass Saug- und Druckseite hier auch axial voneinander getrennt sind. Im Bereich der Saugniere bzw. der Druckniere, deren Darstellung durch Horizontalspiegelung von Fig. 3b erhaltbar ist, wird das MRF gesammelt bzw. verteilt. Die Sammelnut 51 kann auch als Verteilnut 51 bezeichnet werden.

Die Saug- und die Druckniere können auch an der gleichen Stirnseite vorgesehen sein, wobei dann auf (vollumfängliche) Sammelnuten 50 und 51 verzichtet werden muss, da sonst ein Fluidkurzschluss entstehen würde. Die Sammelnuten müssen sich nicht um den vollständigen Umfang erstrecken. Dies gilt auch für den Dämpfungskanal 17.

Denkbar ist auch, dass die Dämpferwelle 3 steht und sich das Gehäuse 12 des Drehdämpfer 1 um die Dämpferwelle 3 dreht und das Gehäuse 12 damit als Dämpfer fungiert. Die Stromzufuhr kann hierbei über Schleifringe oder ähnliches erfolgen.

Figur 4 zeigt eine Explosionsdarstellung des Drehdämpfers 1 im Schnitt, wobei das hier linke Gehäuseteil mit dem ersten Endbereich 22 und auch die erste Verdrängerkomponente 4 und die zweite Verdrängerkomponente 5 jeweils ein Stück axial versetzt angeordnet dargestellt sind, um ein besseres Verständnis der technischen Funktion zu ermöglichen.

Die Dämpferwelle 3 ist hier einstückig mit der ersten Verdrängerkomponente 4 ausgebildet, die auf ihrem Außenumfang eine Außenverzahnung 11 aufweist, die mit einer Innenverzahnung 13 im Inneren der zweiten Verdrängerkomponente 5 kämmt. Radial umgeben wird die zweite Verdrängerkomponente 5 von einem Dämpfungskanal 17, durch den das hier im Inneren der zweiten Verdrängerkomponente 5 durchgeförderte magnetorheologische Fluid wieder zur axial anderen Seite zurückströmen kann.

Außen an dem Gehäuse 12 ist hier die Steuereinrichtung 7 abgebildet, die über einen Energiespeicher 37 oder Akkumulator oder dergleichen mit dem nötigen Strom versorgt werden kann, auch wenn eine elektrische Stromversorgung ausfällt.

Ein Ausgleichsvolumen 29 steht Verfügung, um einen Leckage (z.B. über die Dämpferwelle 3) und /oder Volumenausgleich bei unterschiedlichen Temperaturen zur Verfügung zu stellen. Das Ausgleichsvolumen 29 kann eine komprimiere Masse oder eine komprimiere Gasblase enthalten, um einen Volumenausgleich für unterschiedliche Temperaturen zur Verfügung zu stellen.

Die Dämpferwelle 3 ist über ein Lager 44 gelagert. Die Drehachse 14 der ersten Verdrängerkomponente 4 stimmt mit der Drehachse der Dämpferwelle 3 überein. Die Drehachse 15 der zweiten Verdrängerkomponente 5 ist dazu parallel versetzt.

Figur 5 zeigt eine ähnliche Darstellung wie Figur 4, wobei aber einige Magnetfeldlinien des Magnetfeldes 10 beispielhaft eingezeichnet sind. Die Magnetfeldlinien verlaufen jeweils durch einen Endbereich und den Mittelbereich 23 des Gehäuses 12 und treten etwa radial durch den Dämpfungsspalt 18 (vgl. Fig. 6) zwischen dem Gehäuse 12 und der zweiten Verdrängerkomponente 5 hindurch und treten dann von der zweiten Verdrängerkomponente 5 in die erste Verdrängerkomponente 4 über. Von dort aus verlaufen die Magnetfeldlinien durch den Axialspalt 25 (vgl. Fig. 6) zwischen der ersten bzw. zweiten Verdrängerkomponente 4, 5 und dem jeweiligen Endbereich 22, 24, sodass sich geschlossene Magnetfeldlinien ergeben. Hier werden durch jeweils eine elektrische Spule in jeweils einem Endbereich 22, 24 Magnetfelder erzeugt, die sowohl den radialen Spalt zwischen den Verdrängerkomponenten und auch die beiden axialen stirnseitigen Axialspalte 25 abdichten.

Dadurch, dass in jedem Endbereich des Gehäuses 12 eine elektrische Spule 9 vorgesehen ist und dadurch, dass sich die elektrischen Spulen 9 über den Umfang des jeweiligen Endbereichs erstrecken, wird praktisch jeder Spalt zwischen den Verdrängerkomponenten 4, 5 und zwischen den Verdrängerkomponenten 4, 5 und dem Gehäuse 12 mit dem Magnetfeld 10 der Magnetfeldquelle 8 beaufschlagt. Dadurch verketten die im Innenraum 16 des Drehdämpfers 1 bzw. des Gehäuses 12 vorhandenen magnetorheologischen Partikel des magnetorheologischen Fluids 6 miteinander, wobei die Stärke der Verkettung von der Stärke des einwirkenden Magnetfeldes 10 abhängt.

Durch die magnetisch nicht leitenden Ringe 20, die insgesamt eine relative Permeabilität kleiner zehn aufweisen, wird ein magnetischer Kurzschluss in den jeweiligen Endbereichen 22, 24 zuverlässig verhindert. Es ist auch mögliche, dass ein Endbereich (oder beide) aus zwei oder mehr Teilen oder Abschnitten besteht. Dabei ist der an die Verdrängerkomponenten 4,5 angrenzende Abschnitt vorzugsweise magnetisch besser leitend als der magnetisch nicht leitende Ring. Der angrenzende Abschnitt (oder der gesamte Endbereich) weist vorzugsweise eine relative Permeabilität größer zehn und insbesondere größer 100 und vorzugsweise größer 1000 auf.

Figur 6 zeigt eine leicht modifizierte Ausführungsform in schematisch geschnittener Darstellung, wobei die Abstände und Spalte 18, 25 hier vergrößert dargestellt sind, um sie bei dem dargestellten Maßstab überhaupt sichtbar machen zu können. Hier weist der Drehdämpfer 1 optional einen Elektromotor 35 an dem zweiten Endbereich 24 auf. Dazu ist es möglich, dass sich die Dämpferwelle vollständig durch den Drehdämpfer 1 hindurch erstreckt, sodass der Elektromotor 35 angekoppelt ist. Auf der Seite des ersten Endbereich 22 kann hier ein Vorsatzgetriebe 34 vorgeschaltet werden.

Deutlich sichtbar sind der Axialspalt 25 und der Radialspalt 18 zwischen den Verdrängerkomponenten 4, 5 und den Endbereichen 22, 24 bzw. zwischen der zweiten Komponente 5 und dem Gehäuse 12 in radialer Richtung. In Realität ist der Radialspalt 18 vorzugsweise etwa 2 bis 4 mal und insbesondere etwa dreimal so groß wie der Axialspalt 25. In konkreten Ausgestaltungen haben sich ein Axialspalt 25 von etwa 0,03 mm und ein Radialspalt von etwa bis 0,3 mm als günstig herausgestellt.

Figur 7 zeigt schließlich ein Ausführungsbeispiel in stark schematischer Darstellung, bei dem ein Elektromotor 35 und ein Aktor 36 vorgesehen sein können. Hier umfasst die Vorrichtung 100 zwei Verdrängereinrichtungen 2 und wenigstens ein externes Ventil 30 mit einem Ventilkanal 31 als Dämpfungskanal. Bei dieser Ausgestaltung ist es möglich, dass die einzelnen Verdrängereinrichtungen 2 keinen expliziten Dämpfungskanal aufweisen, sondern dass nur der Dämpfungskanal 31 an dem externen Dämpfungsventil 30 vorgesehen ist. Dort wirkt dann auch das Magnetfeld der Magnetfeldquelle 8. Bei dieser Ausgestaltung ist es möglich, den insbesondere als Rotationseinheit ausgeführten Aktor zu drehen. Die Drehrichtung des Elektromotors 35 kann verändert werden, um einen Linkslauf bzw. Rechtslauf des Aktors einzustellen. Damit kann ein Band oder Seil eines Sportgeräts beispielsweise auch aufgewickelt werden.

Ein anderer möglicher Ansatz zur Gestaltung eines MRF-Drehdämpfers 1 beruht darauf, dass die Pumpe nicht zur unmittelbaren Druckerzeugung sondern durch die Drehbewegung der Pumpe und die Magnetisierung der Spalte eine elektromagnetischer Widerstandsarbeit verrichtet wird. Die Widerstandsarbeit kann über den Strom geregelt werden und ermöglicht es, komplett auf eine (externe) Ventileinheit zu verzichten und baut sehr kompakt.

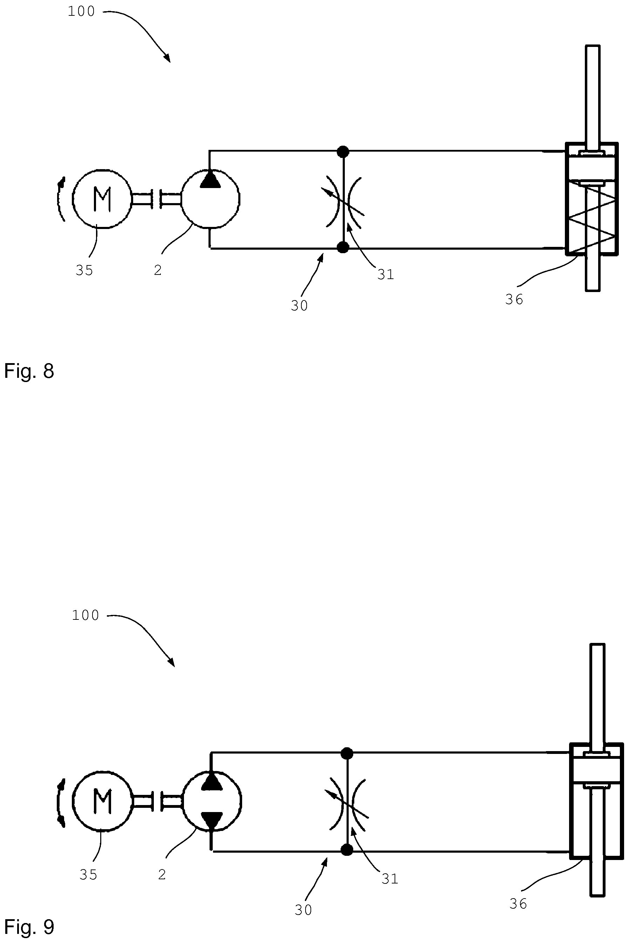

Figur 8 zeigt eine Ausgestaltung der Vorrichtung 100, bei der der Elektromotor 35 immer in dieselbe Richtung läuft, wenn er angeschaltet wird. Hier steuert die Steuereinrichtung das externe Dämpfungsventil 30 mit dem Dämpfungskanal 31 und den Motor 35, der die Verdrängereinrichtung 2 betreibt. In Abhängigkeit von dem an dem Dämpfungskanal wirkenden Magnetfeld wird der Aktor 36, der hier als Kolben-Zylindereinheit ausgebildet ist, gegen die Kraft der integrierten Feder ausgefahren. Wird der Elektromotor angehalten und das Magnetfeld des Dämpfungsventils 30 reduziert, wird der Aktor 36 durch die Kraft der eingezeichneten Feder automatisch zurückgestellt. Die Rückstellbewegung kann entsprechend wieder über den Drehdämpfer 1 bzw. über die Verdrängereinrichtung 2 gesteuert oder auch verhindert werden.

Figur 9 zeigt schließlich eine Ausgestaltung, bei der der elektrische Motor 35 in beide Antriebsrichtungen angetrieben werden kann. Je nach Drehrichtung des Motors fährt der Aktor 36, der hier wiederum als Kolben-Zylindereinheit ausgeführt ist, aus oder ein. Um eine Regelung der Aktorgeschwindigkeit zu erreichen, kann das magnetorheologische Ventil 30 den Volumenstrom von 0 bis 100 % über einen Bypass umleiten.

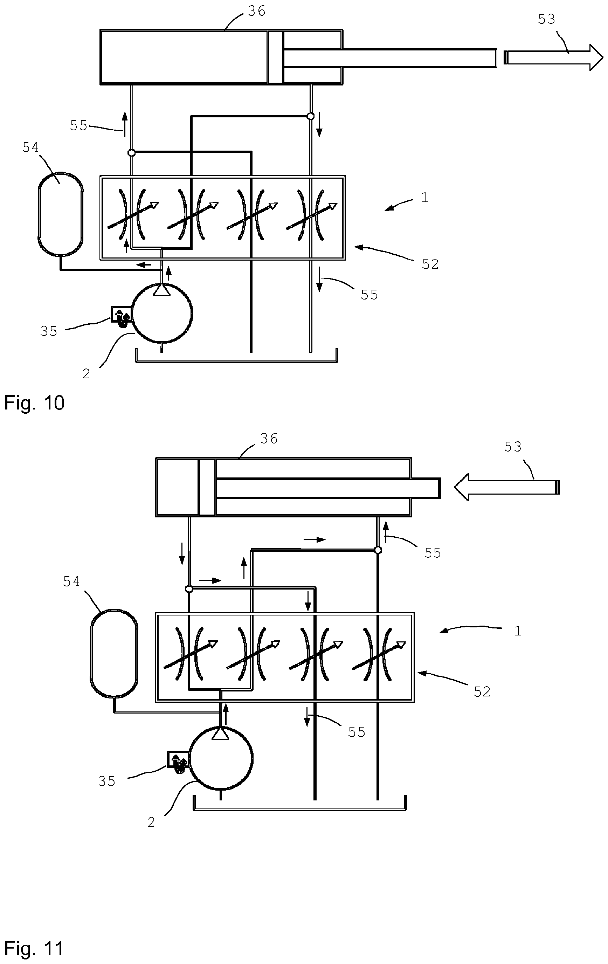

Fig. 10 zeigt ein Übersichtsschaubild über den Einsatz von Drehdämpfern in einem aktiven Hydraulikkreislauf in einer ersten Schaltstellung und Fig. 11 in einer zweiten Schaltstellung.

Die Vorteile liegen hier u.a. in der Möglichkeit einer echtzeitfähigen Steuerung eines Aktors 36 wie z. B. eines Hydraulikzylinders. Es werden vier Ventileinheiten 52 mit zugeordneten Magnetfeldquellen verwendet. Die stufenlose Regelung der Ventileinheiten 52 von 0 bis 100% im Millisekunden-Bereich ermöglicht eine sehr hohe Systemdynamik. Die Arbeitsweise der einzelnen MRF-Hochdruckventile 52 und deren Schaltlogik ist ähnlich einer Brückenschaltung in der Elektronik. In Fig. 10 sind die mittleren beiden der hier ingesamt vier Ventileinheiten 52 (magnetisch) gesperrt. Die äußeren beiden Ventileinheiten 52 können flexibel eingestellt werden. Dadurch ergibt sich ein Fluidfluß des MRF entlang der Pfeile 55 und die Kolbenstange des Zylinders 36 fährt in Richtung des Pfeils 53 aus.

Figur 11 zeigt eine andere Schaltstellung der Ventileinheiten 52, bei der die mittleren beiden Ventileinheiten 52 flexibel eingestellt werden können. Die äußeren beiden Ventileinheiten 52 sind hingegen hier gesperrt. Der Antrieb kann in beide Richtungen über den als Motor 35 dienenden Drehdämpfer 1 erfolgen. Möglich ist es auch, dass in eine Richtung ein Druckspeicher 54 wirkt, der für ein selbsttätiges Ein- oder Ausfahren des Zylinders 36 sorgt.

In allen Ausgestaltungen ist es möglich, eine Energierückgewinnung umzusetzen. So wird zum Beispiel bei dem Einsatz einer Prothese das von außen eingeleitete Drehmoment, wie zum Beispiel beim Hinsetzen über den Drehdämpfer 1, der in diesem Fall als eine Art Pumpe dient, in "hydraulische Energie" umgewandelt und kann anschließend von der Verdrängereinrichtung in elektrische Energie umgewandelt werden. Dazu wird ein elektrischer Antriebsmotor als Generator verwendet. Möglich ist es auch, die Energie in einem Druckspeicher zu speichern. Ein erheblicher Vorteil gegenüber einer rein elektrischen Lösung, bei der ein Elektromotor und ein Getriebe eingesetzt werden, ist die Lautstärke, da Hydraulik generell sehr leise arbeitet. Elektromotoren mit angeschlossenen Getrieben sind hingegen meist lauter. Gerade im Bereich von Prothesen (z.B. sich bewegen während eines Konzertes) ist eine geringe Lautstärke von erheblichem Vorteil. Darüber hinaus benötigt Hydraulik nur wenig Bauraum und ist schnell.

Bei der in Figur 1 rechts dargestellten Variante können die verschiedenen Aktoren intelligent miteinander vernetzt werden, sodass sie sich gegenseitig unterstützen bzw. gegenseitig helfen. So kann der Bremsdruck in einem Drehdämpfer 1 zum Betätigen einer anderen Einheit genutzt werden. Dadurch kann ein harmonischer Bewegungsablauf erzielt werden. Es können das Knie mit der Hüfte oder dem Fuß "vernetzt" werden. Möglich ist es auch, noch mehr oder alle Gelenke miteinander zu verknüpfen, wenn es beispielsweise um den Einsatz als Exoskelett oder an einem Roboter geht. Dazu gehören dann gegebenenfalls auch die Finger oder Zehen. Zudem kann bei dem zusätzlichen Einsatz von Elektromotoren das System auch aktiv ausgeführt werden.

Die Erfindung kann auch zur Begrenzung der Rückhaltekraft eines Sicherheitsgurtes oder einer Sicherheitslenksäule in einen Personenbeförderungsmittel dienen und auf eine solche ausgerichtet sein. Zur optimalen Anpassung und Abstimmung des Rückhaltsystems auch im Zusammenspiel mit z. B. einem Airbag können mehrere Kraftbegrenzerstufen ("weich" bis "hart") eingestellt werden. Es ist möglich, den im Fahrgastraum maximal zur Verfügung stehenden Vorverlagerungsweg des Insassen zu nutzen. Ein Gurtkraftbegrenzer für den Beifahrer kann "weicher" ausgelegt sein, da durch das fehlende Lenkrad in der Regel mehr innerer Vorverlagerungsweg vorhanden ist. Es werden dabei am Gurt Kräfte im Bereich von etwa 2.000N bis etwa 6.000N benötigt, was am Gurtaufroller hohe Momente (bis 100Nm) und hohe Drehzahlen ergibt (bis 6.000 1/min). MRF-Kupplungen nach dem Stand der Technik beherrschen diese Drehzahlen nicht, da das MRF zentrifugiert und somit in seine Bestandteile werden könnte. Ein Getriebe ist aber in der Regel zu groß und zu teuer. Möglich ist es auch, zusätzlich einen Gurtstraffer einzusetzen, damit ein Fahrzeuginsasse möglichst früh abgebremst wird. Der Gurt kann dabei innerhalb von ca. 10-15 Millisekunden um bis zu 15 cm angezogen werden. Das ist insbesondere dann sinnvoll, wenn dicke Kleidung ein straffes Anliegen des Gurtes am Körper verhindert. Soll z. B. ein Medium wie z. B. Papier, Faden oder dergleichen mit gleichbleibender Zugspannung auf eine Rolle aufgewickelt werden, so kann dies mit der Erfindung durch Variation des Antriebs- oder Bremsmomentes entsprechend der Durchmesseränderung der Aufwickelrolle erzielt werden.

Der Einsatz ist auch an Fitness-, Rehabilitations- oder Sportgeräten wie z. B. Gewichthebegeräten, Rudergeräten, Fahrradtrainern und auch am Laufband und dergleichen mehr möglich. Weitere Einsatzgebiete sind adaptive Bremsen bei Fitnessgeräten (z. B. Rotation: Fahrradtrainer; Laufband; Hebel bei Gewichtheben, Rudermaschine; Linearbewegung in Rotation: Gewichte heben etc.). Bei Fitnessgeräten ist eine weg- oder winkelabhängige Gegenkraft/-moment möglich. Bei den heutigen Fitnessgeräten (primär mit Gewichten) bleibt die Gegenkraft (Gegenmoment) über den Verfahrweg-/winkel hingegen gleich (Erdanziehung). Es ist hiermit möglich, die Kraft entsprechend der optimalen Wirkung für den Muskel bzw. Menschen anzupassen. Dies kann auch abhängig von den Stellungen der Gelenke sein. Zudem kann es von Vorteil sein, wenn die Gegenkraft langsam steigt oder fällt, damit es nicht zu Lastspitzen usw. kommt.

Vorteilhaft kann es mit einem Smartphone verknüpft werden zur Protokollierung und Einstellung. Im Smartphone ist dann immer die ideale Einstellung programmiert. Sobald man ins Fitnesscenter oder zur Reha kommt, spiel man diese Einstellung auf das Fitnessgerät. Auch eine Auswertung ist so möglich.

Der Einsatz ist auch in der Prothetik bzw. an Prothesen wie z. B. an einer Knieprothese, an einer Hüftprothese, an einer Fußprothese, an einer Armprothese etc. möglich. Das kann ähnlich zu jetzigen Linearaktoren erfolgen. Im Knie werden ca. 60 bis 150 Nm benötigt.

Eine Bewegungsumsetzung von rotativ in linear oder umgekehrt kann über Hebel in andere Bewegungsformen erfolgen. Eine Verwendung ist auch an Minenschutzsitzen möglich. Die Erfindung kann auch zur Fahrwerksdämpfung von Kraftfahrzeugen verwendet werden.

Der Einsatz kann auch an einem Stabilisator erfolgen, wobei der Drehdämpfer zwischen zwei zueinander verstellbaren und insbesondere gegeneinander drehbaren Komponenten eines Stabilisators angeordnet wird. Dabei wird eine Komponente mit einer Seite und die andere Komponente mit der anderen Seite gekoppelt, sodass eine Relativbewegung/-drehung der Stabilisatorkomponenten zueinander über den Drehdämpfer 1 gesteuert dämpfbar, komplett entkoppelbar oder einstellbar ist. Dadurch kann ein aktiver Stabilisator zur Verfügung gestellt werden, der für unterschiedliche Fahrbedingungen eingestellt werden kann (z.B. ein Rad überfährt ein Schlagloch = entkoppeln; Kurvenfahrt = Wankstabilisierung durch gezieltes dämpfen bzw. verschränken der zwei Stabilisatorhälften).

Möglich ist der Einsatz auch an einer Hinterradschwinge oder einer Vorderradschwinge eines Zweirades oder Fahrrades.

### Bezugszeichenliste:

| | | | |
|---|---|---|---|
| 1 | Drehdämpfer | 29 | Ausgleichsvolumen |
| 2 | Verdrängereinrichtung | 30 | Dämpfungsventil |
| 3 | Dämpferwelle | 31 | Ventilkanal |
| 4 | Verdrängerkomponente | 32 | Winkelsensor |
| 5 | Verdrängerkomponente | 33 | Belastungssensor |
| 6 | magnetorheologisches Fluid | 34 | Vorsatzgetriebe |
| 7 | Steuereinrichtung | 35 | Elektromotor |
| 8 | Magnetfeldquelle | 36 | Aktor |
| 9 | elektrische Spule | 37 | Energiespeicher |
| 10 | Magnetfeld | 38 | Spulenhalter |
| 11 | Außenverzahnung von 4 | 39 | Dauermagnet |
| 12 | Gehäuse von 2 | 40 | Sensoreinrichtung |
| 13 | Innenverzahnung von 5 | 41 | Abstand |
| 14 | Drehachse von 4 | 42 | Dichtung von 23 |
| 15 | Drehachse von 5 | 43 | Zwischenraum |
| 16 | Innenraum von 2 | 44 | Lager |
| 17 | Dämpfungskanal | 50 | Sammelnut |
| 18 | Dämpfungsspalt (radial) | 51 | Sammelnut |
| 19 | Achse von 9 | 52 | Ventileinheit |
| 20 | Ring in 12 | 53 | Bewegungsrichtung |
| 21 | Führungseinheit | 54 | Druckspeicher |
| 22 | erster Endbereich | 55 | Pfeilrichtung |
| 23 | Mittelbereich | 100 | Vorrichtung |
| 24 | zweiter Endbereich | 102 | Seilrolle |
| 25 | Axialspalt | 105 | Prothese |
| 26 | Einlass, Saugseite | 106 | Leitung |
| 26a | Saugniere | 110 | Gerät |
| 27 | Auslass, Druckseite | 111 | Band |
| 27a | Druckniere | 120 | Objekt |
| 28 | Dichtung an 3 | | |

## Patentansprüche

1. Drehdämpfer (1) mit einem Gehäuse (12) und mit wenigstens einer Magnetfeldquelle (8) und mit wenigstens einer in dem Gehäuse (12) angeordneten Verdrängereinrichtung (2), wobei die Verdrängereinrichtung (2) wenigstens ein magnetorheologisches Fluid (6) als Arbeitsfluid enthält und damit betreibbar ist, um eine Dämpfung der Drehbewegung einzustellen,
**dadurch gekennzeichnet,**
**dass** wenigstens ein stirnseitiger Axialspalt (25) zwischen dem Gehäuse und der Verdrängereinrichtung (2) ausgebildet ist und dass ein wesentlicher Teil des Magnetfeldes (10) der Magnetfeldquelle (8) den Axialspalt (25) zwischen dem Gehäuse (12) und den Verdrängerkomponenten (4, 5) durchtritt,
und **dass** die Verdrängereinrichtung (2) eine Dämpferwelle (3) und ineinander eingreifende und relativ zueinander drehbare Verdrängerkomponenten (4, 5) aufweist, wobei eine Drehbewegung der Dämpferwelle (3) dämpfbar ist,
und **dass** an beiden axialen Enden der Verdrängerkomponenten (4, 5) jeweils ein stirnseitiger Axialspalt (25) zwischen dem Gehäuse und der Verdrängereinrichtung (2) ausgebildet ist und wobei ein wesentlicher Teil des Magnetfeldes (10) der Magnetfeldquelle (8) durch beide Axialspalte (25) zwischen dem Gehäuse (12) und den Verdrängerkomponenten (4, 5) durchtritt und eine Dichtung der stirnseitigen Axialspalte (25) bewirkt
und **dass** die Dämpferwelle um mehrere oder eine Vielzahl von Umdrehungen drehbar ist.

2. Drehdämpfer (1) nach einem der vorhergehenden Ansprüche, wobei die Magnetfeldquelle (8) wenigstens eine elektrische Spule (9) umfasst und/oder wobei das Magnetfeld (10) quer zum Axialspalt (25) verläuft.

3. Drehdämpfer (1) nach einem der vorhergehenden Ansprüche, wobei wenigstens zwei elektrische Spulen (9) vorgesehen sind.

4. Drehdämpfer (1) nach einem der vorhergehenden Ansprüche, wobei eine erste Verdrängerkomponente (4) der Verdrängerkomponenten mit der Dämpferwelle (3) fest verbunden ist und wobei eine zweite Verdrängerkomponente (5) der Verdrängerkomponenten in dem Gehäuse (12) der Verdrängereinrichtung (2) drehbar aufgenommen ist, wobei die erste Verdrängerkomponente (4) mit der zweiten Verdrängerkomponente (5) im Eingriff steht und exzentrisch zu der zweiten Verdrängerkomponente (5) angeordnet ist und/oder wobei die erste Verdrängerkomponente (4) eine Außenverzahnung (11) aufweist und wobei die zweite Verdrängerkomponente eine Innenverzahnung (13) aufweist, und wobei die zweite Verdrängerkomponente (5) drehbar in dem Gehäuse (12) aufgenommen ist und/oder wobei ein Innenraum (16) der Verdrängereinrichtung (2) einem wesentlichen Teil des Magnetfeldes der Magnetfeldquelle (8) aussetzbar ist.

5. Drehdämpfer (1) nach dem vorhergehenden Anspruch, wobei die Verdrängereinrichtung (2) wenigstens einen dem Magnetfeld (10) der Magnetfeldquelle (8) aussetzbaren Dämpfungskanal (17) umfasst und wobei insbesondere zumindest ein Dämpfungsspalt (18) als Dämpfungskanal (17) radial zwischen der zweiten Zahnkomponente (5) und dem Gehäuse (12) angeordnet ist und/oder wobei insbesondere wenigstens ein wesentlicher Teil des Magnetfeldes (10) der Magnetfeldquelle (8) durch den Dämpfungsspalt (17) durchtritt und/oder wobei die zweite Verdrängerkomponente (5) in dem Gehäuse (12) über eine Mehrzahl an Führungseinheiten (21) drehbar geführt wird, um einen definierten Dämpfungsspalt (18) zwischen der zweiten Verdrängerkomponente (5) und dem Gehäuse (12) zu gewährleisten.

6. Drehdämpfer (1) nach einem der vorhergehenden Ansprüche, wobei das Gehäuse (12) einen ersten und einen zweiten Endbereich (22, 24) und dazwischen einen Mittelbereich (23) umfasst, wobei in wenigstens einem der beiden Endbereiche (22, 24) und insbesondere in beiden Endbereichen (22, 24) eine elektrische Spule (9) aufgenommen ist, wobei eine Achse (19) der Spule (9) insbesondere im Wesentlichen parallel zur Dämpferwelle (3) ausgerichtet ist und/oder wobei das Gehäuse (12) wenigstens zu einem wesentlichen Teil aus einem magnetisch leitenden Material mit einer relativen Permeabilität größer 100 besteht und/oder wobei axial benachbart zu der elektrischen Spule (9) in dem Gehäuse (12) ein Ring (20) aus einem Material mit einer relativen Permeabilität kleiner 10 angeordnet ist, wobei der Ring (20) insbesondere axial zwischen der elektrischen Spule (9) und den Verdrängerkomponenten (4, 5) angeordnet ist.

7. Drehdämpfer (1) nach einem der vorhergehenden Ansprüche, wobei das magnetorheologische Fluid (6) durch Drehbewegung der ineinander eingreifenden Verdrängerkomponenten (4, 5) von einem Einlass (26) der Verdrängereinrichtung (2) zu einem Auslass (27) der Verdrängereinrichtung (2) förderbar ist, wobei insbesondere der Einlass (27) und der Auslass (28) auf unterschiedlichen axialen Seite der Verdrängereinrichtung (2) angeordnet sind und/oder wobei wobei das Magnetfeld (10) in einem Bereich des Einlasses (27) schwächer ausgebildet ist als in einem Bereich des Auslasses (28).

8. Drehdämpfer (1) nach einem der vorhergehenden Ansprüche, wobei ein Ausgleichsvolumen (29) vorgesehen ist, um einen Temperaturausgleich zu ermöglichen und/oder wobei ein Winkelsensor (32) ein Maß für eine Winkelposition der Dämpferwelle (3) erfasst.

9. Drehdämpfer (1) nach einem der vorhergehenden Ansprüche, wobei der Dämpfungskreislauf des magnetorheologischen Fluids (6) vollständig innerhalb des Gehäuses angeordnet ist oder wobei ein externes Dämpfungsventil (30) mit einem Ventilkanal (31) als Dämpfungskanal (17) vorgesehen ist.

10. Drehdämpfer (1) nach einem der vorhergehenden Ansprüche, **gekennzeichnet durch** einen Belastungssensor (33) zur Erfassung eines Kennwertes für ein Drehmoment an der Dämpferwelle (3) und/oder durch wenigstens einen mit der Dämpferwelle (3) koppelbaren Elektromotor (35) und/oder durch wenigstens zwei insbesondere hydraulisch miteinander verbundene Verdrängereinrichtungen und/oder durch einen wieder aufladbaren Energiespeicher (37).

11. Drehdämpfer (1) nach einem der vorhergehenden Ansprüche, wobei wenigstens ein externer Aktor (36) in Fluidverbindung mit der Verdrängereinrichtung (2) steht und/oder wobei wenigstens ein Aktor (36) als Kolben-Zylindereinheit ausgebildet ist und/oder wobei wenigstens eine Sensoreinrichtung (40) umfassend wenigstens einen Positions- und/oder Abstandssensor zur Erfassung einer Position und/oder eines Abstands (41) von umgebenden Objekten vorgesehen ist, wobei die Steuereinrichtung dazu ausgebildet und eingerichtet ist, den Drehdämpfer in Abhängigkeit von den Sensordaten der Sensoreinrichtung zu steuern und/oder wobei sich in der Verdrängereinrichtung (2) infolge einer Drehbewegung der Verdrängerkomponenten (4, 5) einer geometrischen Vergrößerung oder Verkleinerung des Verdrängerraums ein Druck einstellt.

12. Vorrichtung (100) oder Maschine, wie beispielsweise ein Wickelgerät, eine Spulenmaschine oder eine Webmaschine, eine Prothese (105), ein Stabilisator eines Kraftfahrzeuges, ein Gerät (110) zur Unterstützung beim Sport, bei der Rehabilitation oder bei Fitnessübungen, oder zwei relativ zueinander bewegbare Einheiten, umfassend wenigstens einen Drehdämpfer (1) nach wenigstens einem der vorhergehenden Ansprüche.

13. Sicherheitslenksäule eines Kraftfahrzeuges, mit zwei relativ zueinander bewegbaren Einheiten, umfassend wenigstens einen Drehdämpfer (1) nach wenigstens einem der vorhergehenden Ansprüche.

## Claims

1. Rotary damper (1) comprising a housing (12) and at least one magnetic field source (8), and at least one displacing device (2) disposed in the housing (12), wherein the displacing device (2) contains at least one magnetorheological fluid (6) as a working fluid by means of which it can operate to set and adjust the damping of the rotary motion,
**characterized in**
**that** at least one front-face axial gap (25) is configured between the housing and the displacing device (2), and that a substantial part of the magnetic field (10) of the magnetic field source (8) passes through the axial gap (25) between the housing (12) and the displacing components (4, 5), and that the displacing device (2) comprises a damper shaft (3) and intermeshing displacing components (4, 5) which are rotatable relative to one another, wherein a rotary motion of the damper shaft (3) can be dampened, and that both of the axial ends of the displacing components (4, 5) show a front-face axial gap (25) configured between the housing and the displacing device (2), and wherein a substantial part of the magnetic field (10) of the magnetic field source (8) passes through both of the axial gaps (25) between the housing (12) and the displacing components (4, 5), and causes sealing of the front-face axial gaps (25), and that the damper shaft is rotatable by a plurality or a multitude of revolutions.

2. The rotary damper (1) according to any of the preceding claims, wherein the magnetic field source (8) comprises at least one electric coil (9), and/or wherein the magnetic field (10) runs transverse to the axial gap (25).

3. The rotary damper (1) according to any of the preceding claims, wherein at least two electric coils (9) are provided.

4. The rotary damper (1) according to any of the preceding claims, wherein a first displacing component (4) of the displacing components is fixedly connected with the damper shaft (3), and wherein a second displacing component (5) of the displacing components is rotatably accommodated in the housing (12) of the displacing device (2), wherein the first displacing component (4) is in engagement with the second displacing component (5) and is disposed eccentric relative to the second displacing component (5), and/or wherein the first displacing component (4) comprises an external toothing (11), and wherein the second displacing component comprises an internal toothing (13), and wherein the second displacing component (5) is rotatably accommodated in the housing (12), and/or wherein an internal space (16) of the displacing device (2) can be exposed to a substantial part of the magnetic field of the magnetic field source (8).

5. The rotary damper (1) according to the preceding claim, wherein the displacing device (2) comprises at least one damping duct (17) that can be exposed to the magnetic field (10) of the magnetic field source (8), and wherein in particular at least one damping gap (18) is radially disposed as a damping duct (17) between the second toothed component (5) and the housing (12), and/or wherein in particular at least a substantial part of the magnetic field (10) of the magnetic field source (8) passes through the damping gap (17), and/or wherein the second displacing component (5) is rotatably guided in the housing (12) by means of a plurality of guide units (21) to ensure a defined damping gap (18) between the second displacing component (5) and the housing (12).

6. The rotary damper (1) according to any of the preceding claims, wherein the housing (12) comprises a first and a second end region (22, 24) and a central region (23) in-between, wherein at least one of the two end regions (22, 24) and in particular both of the end regions (22, 24) accommodate an electric coil (9), wherein the axis (19) of the coil (9) is in particular aligned substantially in parallel to the damper shaft (3), and/or wherein the housing (12) consists at least substantially of a magnetically conducting material showing a relative permeability of more than 100, and/or wherein axially adjacent to the electric coil (9), a ring (20) of a material showing a relative permeability of less than 10 is disposed in the housing (12), wherein the ring (20) is in particular disposed axially between the electric coil (9) and the displacing components (4, 5).

7. The rotary damper (1) according to any of the preceding claims, wherein the magnetorheological fluid (6) can be conveyed by rotary motion of the intermeshing displacing components (4, 5) from an inlet (26) of the displacing device (2) to an outlet (27) of the displacing device (2), wherein in particular the inlet (27) and the outlet (28) are disposed on different axial sides of the displacing device (2), and/or wherein the magnetic field (10) is configured weaker in a region of the inlet (27) than in a region of the outlet (28).

8. The rotary damper (1) according to any of the preceding claims, wherein an equalizing volume (29) is provided to enable temperature equalization, and/or wherein an angle sensor (32) captures a measure of the angular position of the damper shaft (3) .

9. The rotary damper (1) according to any of the preceding claims, wherein the damping circuit of the magnetorheological fluid (6) is disposed entirely inside of the housing, or wherein an external damping valve (30) with a valve duct (31) is provided as a damping duct (17),

10. The rotary damper (1) according to any of the preceding claims, **characterized by** a load sensor (33) for capturing a characteristic value of a rotational force on the damper shaft (3), and/or by at least one electric motor (35) that can be coupled with the damper shaft (3), and/or by at least two displacing devices which are in particular hydraulically connected with one another, and/or by a rechargeable energy storage device (37).

11. The rotary damper (1) according to any of the preceding claims, wherein at least one external actuator (36) is in fluid connection with the displacing device (2), and/or wherein at least one actuator (36) is configured as a piston cylinder unit, and/or wherein at least one sensor device (40) comprising at least one position- and/or distance sensor is provided to capture the position and/or the distance (41) from surrounding objects, wherein the control device is configured and set up to control the rotary damper in dependence on the sensor data of the sensor device, and/or wherein a pressure builds up in the displacing device (2) due to a rotary motion of the displacing components (4, 5) of a geometric enlargement or reduction of the displacement volume.

12. Device (100) or machine, such as a winding device or spooling machine or loom, a prosthesis (105), a motor vehicle stabilizer, a device (110) for aiding in sports, in rehabilitation or fitness exercises, or two units movable relative to one another, comprising at least one rotary damper (1) according to at least one of the preceding claims.

13. Safety steering column of a motor vehicle, comprising two units movable relative to one another, comprising at least one rotary damper (1) according to at least one of the preceding claims.

## Revendications

1. Amortisseur rotatif (1) doté d'un boîtier (12) et d'au moins une source de champ magnétique (8) et d'au moins un organe de refoulement (2) agencé dans le boîtier (12), l'organe de refoulement (2) contenant au moins un fluide magnéto-rhéologique (6) en tant que fluide de travail, et pouvant être actionné avec celui-ci pour régler un amortissement du mouvement rotatif,
**caractérisé en ce**
**qu'**au moins un interstice axial frontal (25) est formé entre le boîtier et l'organe de refoulement (2), et qu'une partie essentielle du champ magnétique (10) de la source de champ magnétique (8) traverse l'interstice axial (25) entre le boîtier (12) et les composants de refoulement (4, 5), et que l'organe de refoulement (2) présente un arbre d'amortissement (3) et des composants de refoulement (4, 5) s'engageant les uns dans les autres et pouvant tourner les uns par rapport aux autres, un mouvement de rotation de l'arbre d'amortissement (3) pouvant être amorti, et **en ce que**, aux deux extrémités axiales des composants de refoulement (4, 5), un interstice axial frontal (25) est respectivement formé entre le boîtier et l'organe de refoulement (2), et une partie essentielle du champ magnétique (10) de la source de champ magnétique (8) traversant les deux interstices axiaux (25) entre le boîtier (12) et les composants de refoulement (4, 5), et provoquant une étanchéité des interstices axiaux frontaux (25) et **en ce que** l'arbre d'amortissement peut tourner de plusieurs ou d'une pluralité de tours.

2. Amortisseur rotatif (1) selon l'une quelconque des revendications précédentes, la source de champ magnétique (8) comprenant au moins une bobine électrique (9) et/ou le champ magnétique (10) s'étendant transversalement à l'interstice axial (25).

3. Amortisseur rotatif (1) selon l'une quelconque des revendications précédentes, au moins deux bobines électriques (9) étant prévues.

4. Amortisseur rotatif (1) selon l'une quelconque des revendications précédentes, un premier composant de refoulement (4) des composants de refoulement étant solidaire de l'arbre d'amortissement (3) et un deuxième composant de refoulement (5) des composants de refoulement étant logé rotatif dans le boîtier (12) de l'organe de refoulement (2), le premier composant de refoulement (4) étant en prise avec le deuxième composant de refoulement (5) et étant agencé de manière excentrée par rapport au deuxième composant de refoulement (5), et/ou le premier composant de refoulement (4) présentant une denture extérieure (11) et le deuxième composant de refoulement présentant une denture intérieure (13), et le premier composant de refoulement (5) étant logé rotatif dans le boîtier (12), et/ou un espace intérieur (16) de l'organe de refoulement (2) étant exposé à une partie essentielle du champ magnétique de la source de champ magnétique (8).

5. Amortisseur rotatif (1) selon la revendication précédente, l'organe de refoulement (2) comprenant au moins un canal d'amortissement (17) pouvant être exposé au champ magnétique (10) de la source de champ magnétique (8), et notamment au moins un interstice d'amortissement (18) étant agencé radialement en tant que canal d'amortissement (17) entre le deuxième composant denté (5) et le boîtier (12), et/ou notamment au moins une partie essentielle du champ magnétique (10) de la source de champ magnétique (8) traverse l'interstice d'amortissement (17) et/ou le deuxième composant d'amortissement (5) étant guidé en rotation dans le boîtier (12) par une pluralité d'unités de guidage (21) afin de garantir un interstice d'amortissement défini (18) entre le deuxième composant de refoulement (5) et le boîtier (12).

6. Amortisseur rotatif (1) selon l'une quelconque des revendications précédentes, le boîtier (12) comprenant une première et une deuxième zone d'extrémité (22, 24) et une zone médiane (23) entre elles, une bobine électrique (9) étant logée dans au moins l'une des deux zones d'extrémité (22, 24) et notamment dans les deux zones d'extrémité (22, 24), un axe (19) de la bobine (9) étant orienté notamment sensiblement parallèlement à l'arbre d'amortissement (3), et/ou le boîtier (12) étant constitué au moins pour une partie essentielle d'un matériau magnétiquement conducteur ayant une perméabilité relative supérieure à 100 et/ou un anneau (20) en un matériau ayant une perméabilité relative inférieure à 10 étant disposé dans le boîtier (12) au voisinage axial de la bobine électrique (9), l'anneau (20) étant disposé notamment axialement entre la bobine électrique (9) et les composants de refoulement (4, 5).

7. Amortisseur rotatif (1) selon l'une quelconque des revendications précédentes, le fluide magnéto-rhéologique (6) pouvant être transporté d'une entrée (26) de l'organe de refoulement (2) à une sortie (27) de l'organe de refoulement (2) par un mouvement de rotation des composants de refoulement (4, 5) qui s'engagent les uns dans les autres, notamment l'entrée (27) et la sortie (28) étant agencées sur des côtés axiaux différents de l'organe de refoulement (2), et/ou le champ magnétique (10) étant plus faible dans une zone de l'entrée (27) que dans une zone de la sortie (28).

8. Amortisseur rotatif (1) selon l'une quelconque des revendications précédentes, un volume de compensation (29) étant prévu pour permettre une compensation de température et/ou un capteur angulaire (32) détectant une mesure pour une position angulaire de l'arbre d'amortissement (3).

9. Amortisseur rotatif (1) selon l'une quelconque des revendications précédentes, le cycle d'amortissement du fluide magnéto-rhéologique (6) étant agencé dans sa totalité à l'intérieur du boîtier, ou une soupape d'amortissement (30) externe étant prévue dotée d'un canal de soupape (31) comme canal d'amortissement (17).

10. Amortisseur rotatif (1) selon l'une quelconque des revendications précédentes, **caractérisé par** un capteur de charge (33) destiné à détecter une valeur caractéristique d'un couple sur l'arbre d'amortissement (3), et/ou par au moins un moteur électrique (35) pouvant être couplé à l'arbre d'amortissement (3) et/ou par au moins deux organes de refoulement reliés entre eux notamment hydrauliquement et/ou par un accumulateur d'énergie (37) rechargeable.

11. Amortisseur rotatif (1) selon l'une quelconque des revendications précédentes, au moins un actionneur externe (36) étant en liaison fluidique avec l'organe de refoulement (2) et/ou au moins un actionneur (36) étant conçu comme une unité piston-cylindre, et/ou au moins un dispositif de détection (40) qui comprend au moins un capteur de position et/ou de distance étant prévu pour détecter une position et/ou une distance (41) d'objets environnants, le dispositif de commande étant conçu et agencé pour commander l'amortisseur rotatif en fonction des données de capteur du dispositif de capteur et/ou une pression s'établissant dans l'organe de refoulement (2) suite à un mouvement de rotation des composants de refoulement (4, 5) d'un agrandissement ou d'une réduction géométrique de la chambre de refoulement.

12. Dispositif (100) ou machine, tel que par exemple un enrouleur, un bobinoir ou un métier à tisser, une prothèse (105), une barre stabilisatrice d'un véhicule automobile, un appareil (110) d'aide au sport, à la rééducation ou aux exercices de fitness, ou deux unités mobiles l'une par rapport à l'autre, comprenant au moins un amortisseur rotatif (1) selon au moins l'une quelconque des revendications précédentes.

13. Colonne de direction de sécurité d'un véhicule automobile, comportant deux ensembles mobiles l'un par rapport à l'autre, comprenant au moins un amortisseur rotatif (1) selon au moins l'une quelconque des revendications précédentes.
